# EUROPEAN PATENT APPLICATION

(11) **EP 3 393 093 A1**
(43) Date of publication of application: **24.10.2018**
(21) Application number: 16902264.7
(22) Date of filing: 26.12.2016
(51) Int. Cl.: H04L 12/741

(54) **COMMUNICATION METHOD AND DEVICE FOR USE IN VIRTUAL EXTENSIBLE LOCAL AREA NETWORK**

(30) Priority: 19.05.2016 CN 201610338278
(71) Applicant: Huawei Technologies Co., Ltd., Longgang District Shenzhen, Guangdong 518129 (CN)
(72) Inventor: HAO, Weiguo, Shenzhen Guangdong 518129 (CN); GAO, Yuan, Shenzhen Guangdong 518129 (CN); HAN, Tao, Shenzhen Guangdong 518129 (CN); ZHU, Yongfei, Shenzhen Guangdong 518129 (CN)
(74) Representative: Gill Jennings & Every LLP
(86) International application number: PCT/CN2016/112140
(87) International publication number: WO 2017/197885

(57) **Abstract**

Embodiments of the present invention provide a communications method and apparatus for a VXLAN. A data center of the VXLAN includes a first layer-3 gateway device and a second layer-3 gateway device, and the method includes: receiving, by the first layer-3 gateway device, host routing information sent by the second layer-3 gateway device, where the host routing information includes an Internet Protocol IP address of the first host, a media access control MAC address of the first host, and a VTEP identifier of a next hop that is of the first layer-3 gateway device and that exists when the first layer-3 network device sends information to the first host; and forwarding, by the first layer-3 gateway device, a traffic packet destined for the first host or acting, by the first layer-3 gateway device, as an ARP proxy for the first host, based on the host routing information. According to the embodiments of this application, traffic waste can be reduced.

## Description

This application claims priority to Chinese Patent Application No. 201610338278.9, filed with the Chinese Patent Office on May 19, 2016 and entitled "COMMUNICATIONS METHOD AND APPARATUS FOR VIRTUAL EXTENSIBLE LOCAL AREA NETWORK", which is incorporated herein by reference in its entirety.

### TECHNICAL FIELD

Embodiments of this application relate to the communications field, and in particular, to a communications method and apparatus for a Virtual Extensible Local Area Network (Virtual eXtensible Local Area Network, VXLAN).

### BACKGROUND

A data center of a VXLAN may include at least two layer-3 gateway devices. The at least two layer-3 gateway devices may manage different virtual machines in the VXLAN, and such a layer-3 gateway device may be referred to as a distributed layer-3 gateway device.

In a data center having distributed layer-3 gateway devices, each time the device obtains a forwarding entry, the device needs to broadcast an address request packet, causing traffic waste.

### SUMMARY

Embodiments of this application provide a communications method and apparatus for a VXLAN, a storage medium, and a data center, so as to reduce traffic waste.

According to a first aspect, a communication method for a Virtual Extensible Local Area Network VXLAN is provided, where a data center of the VXLAN includes a first layer-3 gateway device and a second layer-3 gateway device, and the method includes: receiving, by the first layer-3 gateway device, host routing information sent by the second layer-3 gateway device, where the host routing information includes an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host; and forwarding, by the first layer-3 gateway device, a traffic packet destined for the first host or acting, by the first layer-3 gateway device, as an Address Resolution Protocol ARP proxy for the first host, based on the host routing information.

Optionally, the second layer-3 gateway device sends the host routing information in a broadcast manner.

Optionally, a host managed by the first layer-3 gateway device is different from a host managed by the second layer-3 gateway device. Specifically, hosts managed by the two layer-3 gateway devices are all different, or some of hosts managed by the at least two layer-3 gateway devices are different. In this case, the first host belongs only to the second layer-3 gateway device. In other words, this embodiment of this application may be applied to a scenario of distributed layer-3 gateway devices. In this scenario, each layer-3 gateway device manages a different host.

The host mentioned in this embodiment of this application may be referred to as a virtual machine.

Therefore, in this embodiment of this application, host routing information of a host is advertised between at least two layer-3 gateway devices. The host routing information includes an IP address of the host, a MAC address of the host, and a VTEP identifier of a next hop that is of a host routing receiving party and that exists when the host routing receiving party sends information to the host. A layer-3 gateway device receiving the host routing information forwards a packet destined for the host and acts as an ARP proxy for the host, based on the host routing information. Therefore, a quantity of packets that are used for obtaining a forwarding entry and that are broadcast between the at least two layer-3 gateway devices can be reduced, and backhaul traffic can be reduced. Further, routing information of a host is advertised between layer-3 gateway devices without dependence on a controller for delivering a static forwarding entry, so that the following problem can be avoided: The forwarding entry cannot be updated in a timely manner because the controller delivers the static forwarding entry to the layer-3 gateway devices and the host.

With reference to the first aspect, in a first possible implementation of the first aspect, the first layer-3 gateway device manages a second host, and the acting, by the first layer-3 gateway device, as an ARP proxy for the first host includes: receiving a first address request packet sent by the second host, where in the first address request packet, a source IP address is an IP address of the second host, a source MAC address is a MAC address of the second host, and a destination IP address is the IP address of the first host; determining that the destination IP address in the first address request packet matches the IP address of the first host in the host routing information; obtaining the MAC address of the first host based on the host routing information; and sending a first address response packet to the second host, where in the first address response packet, a source IP address is the IP address of the first host, a source MAC address is the MAC address of the first host, a destination IP address is the IP address of the second host, and a destination MAC address is the MAC address of the second host.

In this application, the address request packet may be referred to as an ARP request packet, and the address response packet may be referred to as an ARP response packet.

With reference to the first aspect or the first possible implementation of the first aspect, in a second possible implementation of the first aspect, the first layer-3 gateway device manages a second host, and the forwarding, by the first layer-3 gateway device, a traffic packet destined for the first host includes: receiving a traffic packet sent by the second host, where in the traffic packet, a source IP address is an IP address of the second host, a source MAC address is a MAC address of the second host, a destination IP address is the IP address of the first host, and a destination MAC address is the MAC address of the first host; determining that the destination IP address in the traffic packet matches the IP address of the first host in the host routing information; obtaining the VTEP identifier of the next hop based on the host routing information; encapsulating the VTEP identifier of the next hop into the traffic packet; and sending the encapsulated traffic packet to the next hop.

With reference to any one of the first aspect or the possible implementations of the first aspect, in a third possible implementation of the first aspect, the receiving, by the first layer-3 gateway device, host routing information sent by the second layer-3 gateway device includes: receiving, by the first layer-3 gateway device, the host routing information broadcast by the second layer-3 gateway device.

With reference to any one of the first aspect or the possible implementations of the first aspect, in a fourth possible implementation of the first aspect, the second layer-3 gateway device manages the first host, and the method further includes: broadcasting, by the first layer-3 gateway device, a second address request packet, where in the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host; and the receiving, by the first layer-3 gateway device, host routing information sent by the second layer-3 gateway device includes: receiving, by the first layer-3 gateway device, a second address response packet, where in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or receiving, by the first layer-3 gateway device, the host routing information that is generated by the second layer-3 gateway device based on the second address response packet and that is broadcast by the second layer-3 gateway device.

Optionally, the first host is a silent server, that is, the server does not actively send a packet.

Optionally, in this embodiment of this application, a packet to be broadcast by using a VXLAN tunnel may be broadcast by means of head-end replication or in a multicast manner.

With reference to any one of the first aspect or the possible implementations of the first aspect, in a fifth possible implementation of the first aspect, after the first layer-3 gateway device receives the second address response packet and the broadcast host routing information, the forwarding, by the first layer-3 gateway device, a traffic packet destined for the first host or acting, by the first layer-3 gateway device, as an Address Resolution Protocol ARP proxy for the first host, based on the host routing information includes: selecting, based on a priority order of the host routing information included in the second address response packet and the host routing information broadcast by the second layer-3 gateway device, host routing information used for forwarding a traffic packet destined for the first host or acting as an ARP proxy for the first host.

With reference to any one of the first aspect or the possible implementations of the first aspect, in a sixth possible implementation of the first aspect, the second layer-3 gateway device manages the first host, the first layer-3 gateway device manages a third host, and the method further includes:
receiving, by the first layer-3 gateway device, a third address request packet, where in the third address request packet, a source IP address is an IP address of the third host, a source MAC address is a MAC address of the third host, and a destination IP address is the IP address of the first host; determining, by the first layer-3 gateway device, that the first layer-3 gateway device does not store the host routing information corresponding to the IP address of the first host; and broadcasting, by the first layer-3 gateway device, the third address request packet; and the receiving, by the first layer-3 gateway device, host routing information sent by the second layer-3 gateway device includes: receiving, by the first layer-3 gateway device, a third address response packet, where the third address response packet includes the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or receiving, by the first layer-3 gateway device, the host routing information that is generated by the second layer-3 gateway device based on the third address response packet and that is broadcast by the second layer-3 gateway device.

With reference to any one of the first aspect or the possible implementations of the first aspect, in a seventh possible implementation of the first aspect, after the first layer-3 gateway device receives the third address response packet and the broadcast host routing information, the forwarding, by the first layer-3 gateway device, a traffic packet destined for the first host or acting, by the first layer-3 gateway device, as an Address Resolution Protocol ARP proxy for the first host, based on the host routing information includes: selecting, based on a priority order of the host routing information included in the third address response packet and the host routing information broadcast by the second layer-3 gateway device, host routing information used for forwarding a traffic packet destined for the first host or acting as an ARP proxy for the first host.

With reference to any one of the first aspect or the possible implementations of the first aspect, in an eighth possible implementation of the first aspect, the data center further includes a layer-2 gateway device that is connected between the second layer-3 gateway device and a host managed by the second layer-3 gateway device; and the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or the VTEP identifier of the next hop is a VTEP identifier of the second layer-3 gateway device.

With reference to any one of the first aspect or the possible implementations of the first aspect, in a ninth possible implementation of the first aspect, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

According to a second aspect, a communication method for a VXLAN is provided, where a data center of the VXLAN includes a second layer-3 gateway device, and the method includes: generating, by the second layer-3 gateway device, host routing information, where the host routing information includes an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host; and sending, by the second layer-3 gateway device, the host routing information to another layer-3 gateway device in the data center.

With reference to the second aspect, in a first possible implementation of the second aspect, the second layer-3 gateway device manages the first host, the another layer-3 gateway device includes a first layer-3 gateway device, and before the generating, by the second layer-3 gateway device, host routing information, the method further includes:
receiving, by the second layer-3 gateway device, a second address request packet broadcast by the first layer-3 gateway device, where in the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device;
broadcasting, by the second layer-3 gateway device, the second address request packet to a host managed by the second layer-3 gateway device;
receiving, by the second layer-3 gateway device, a second address response packet, where in the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host;
obtaining, by the second layer-3 gateway device, the IP address of the first host from the source IP address in the received second address response packet, and obtaining the MAC address of the first host from the source MAC address in the received second address response packet; and
using a VTEP identifier of the second layer-3 gateway device as the VTEP identifier of the next hop, or when the second address response packet includes a source VTEP identifier and a destination VTEP identifier, obtaining the VTEP identifier of the next hop from the source VTEP identifier in the received second address response packet, where the source VTEP identifier is a VTEP identifier of a layer-2 gateway device between the second layer-3 gateway device and the first host, and the destination VTEP identifier is a VTEP identifier of the second layer-3 gateway device.

Optionally, the method further includes: sending, by the second layer-3 gateway device, the second address response packet to the first layer-3 gateway device.

With reference to any one of the second aspect or the possible implementation of the second aspect, in a second possible implementation of the second aspect, the second layer-3 gateway device manages the first host, the another layer-3 gateway device includes a first layer-3 gateway device, the first layer-3 gateway device manages a third host, and before the generating, by the second layer-3 gateway device, host routing information, the method further includes:
receiving, by the second layer-3 gateway device, a third address request packet that is from the third host and that is broadcast by the first layer-3 gateway device, where in the third address request packet, a source IP address is an IP address of the third host, a source MAC address is a MAC address of the third host, and a destination IP address is the IP address of the first host;
broadcasting, by the second layer-3 gateway device, the third address request packet to a host managed by the second layer-3 gateway device;
receiving, by the second layer-3 gateway device, a third address response packet, where in the third address response packet, a destination IP address is the IP address of the third host, a destination MAC address is the MAC address of the third host, a source IP address is the IP address of the first host, and a source MAC address is the MAC address of the first host;
obtaining, by the second layer-3 gateway device, the IP address of the first host from the source IP address in the third address response packet, and obtaining the MAC address of the first host from the source MAC address in the third address response packet; and
using a VTEP identifier of the second layer-3 gateway device as the VTEP identifier of the next hop, or when the second address response packet includes a source VTEP identifier and a destination VTEP identifier, obtaining the VTEP identifier of the next hop from the source VTEP identifier in the received third address response packet, where the source VTEP identifier is a layer-2 gateway device between the second layer-3 gateway device and the first host, and the destination VTEP identifier is a VTEP identifier of the second layer-3 gateway device.

Optionally, the method further includes: sending, by the second layer-3 gateway device, the third address response packet to the first layer-3 gateway device.

With reference to any one of the second aspect or the possible implementations of the second aspect, in a third possible implementation of the second aspect, before the generating, by the second layer-3 gateway device, host routing information, the method further includes:
obtaining, by the second layer-3 gateway device, the IP address of the first host and the MAC address of the first host based on an ARP entry of the first host; and
determining a VTEP identifier of the second layer-3 gateway device as the VTEP identifier of the next hop, or when a MAC entry of the first host exists, determining a VTEP identifier indicated by the MAC entry as the VTEP identifier of the next hop.

With reference to any one of the second aspect or the possible implementations of the second aspect, in a fourth possible implementation of the second aspect, the sending, by the second layer-3 gateway device, the host routing information includes:
sending, by the second layer-3 gateway device, the host routing information by using a neighbor relationship established between the second layer-3 gateway device and the another layer-3 gateway device; or
sending, by the second layer-3 gateway device, the host routing information to a route reflector by using a neighbor relationship established between the second layer-3 gateway device and the route reflector, so that the route reflector sends the host routing information to the another layer-3 gateway device.

With reference to any one of the second aspect or the possible implementations of the second aspect, in a fifth possible implementation of the second aspect, the data center further includes a layer-2 gateway device that is connected between the second layer-3 gateway device and a host managed by the second layer-3 gateway device; and
the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or the VTEP identifier of the next hop is a VTEP identifier of the second layer-3 gateway device.

With reference to any one of the second aspect or the possible implementations of the second aspect, in a sixth possible implementation of the second aspect, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

According to a third aspect, a communications apparatus for a Virtual Extensible Local Area Network VXLAN is provided, where a data center of the VXLAN includes a first layer-3 gateway device and a second layer-3 gateway device, the communications apparatus is the first layer-3 gateway device, and the apparatus includes a receiving unit and a processing unit, where
the receiving unit is configured to receive host routing information sent by the second layer-3 gateway device, where the host routing information includes an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host; and
the processing unit is configured to: forward a traffic packet destined for the first host, based on the host routing information, and act as an Address Resolution Protocol ARP proxy for the first host, based on the host routing information.

With reference to the third aspect, in a first possible implementation of the third aspect, the first layer-3 gateway device manages a second host, and the apparatus further includes a sending unit, where
the receiving unit is further configured to receive a first address request packet sent by the second host, where in the first address request packet, a source IP address is an IP address of the second host, a source MAC address is a MAC address of the second host, and a destination IP address is the IP address of the first host;
the processing unit is configured to: determine that the destination IP address in the first address request packet matches the IP address of the first host in the host routing information; obtain the MAC address of the first host based on the host routing information; and instruct the sending unit to send a first address response packet, where in the first address response packet, a source IP address is the IP address of the first host, a source MAC address is the MAC address of the first host, a destination IP address is the IP address of the second host, and a destination MAC address is the MAC address of the second host; and
the sending unit is configured to send the first address response packet to the second host.

With reference to the third aspect or the first possible implementation of the third aspect, in a second possible implementation of the third aspect, the first layer-3 gateway device manages a second host, and the apparatus further includes a sending unit, where
the receiving unit is further configured to receive a traffic packet sent by the second host, where in the traffic packet, a source IP address is an IP address of the second host, a source MAC address is a MAC address of the second host, a destination IP address is the IP address of the first host, and a destination MAC address is the MAC address of the first host;
the processing unit is further configured to: determine that the destination IP address in the traffic packet matches the IP address of the first host in the host routing information; obtain the VTEP identifier of the next hop based on the host routing information; encapsulate the VTEP identifier of the next hop into the traffic packet; and instruct the sending unit to send the encapsulated traffic packet to the next hop; and
the sending unit is further configured to send the encapsulated traffic packet to the next hop.

With reference to any one of the third aspect or the possible implementations of the third aspect, in a third possible implementation of the third aspect, the receiving unit is specifically configured to:
receive the host routing information broadcast by the second layer-3 gateway device.

With reference to the third aspect or any one of the possible implementations of the third aspect, in a fourth possible implementation of the third aspect, the apparatus further includes the sending unit, where the sending unit is further configured to broadcast a second address request packet, where in the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host; and
the receiving unit is further configured to: receive a second address response packet, where in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or
receive the host routing information that is generated by the second layer-3 gateway device based on the second address response packet and that is broadcast by the second layer-3 gateway device.

With reference to any one of the third aspect or the possible implementations of the third aspect, in a fifth possible implementation of the third aspect, after the receiving unit receives the second address response packet and the broadcast host routing information, the processing unit is further configured to:
select, based on a priority order of the host routing information included in the second address response packet and the host routing information broadcast by the second layer-3 gateway device, host routing information used for forwarding a traffic packet destined for the first host or acting as an ARP proxy for the first host.

With reference to any one of the third aspect or the possible implementations of the third aspect, in a sixth possible implementation of the third aspect, the first layer-3 gateway device manages a third host, where
the receiving unit is further configured to receive a third address request packet, where in the third address request packet, a source IP address is an IP address of the third host, a source MAC address is a MAC address of the third host, and a destination IP address is the IP address of the first host;
the processing unit is further configured to determine that the first layer-3 gateway device does not store the host routing information corresponding to the IP address of the first host;
the sending unit is further configured to broadcast the third address request packet; and
the receiving unit is further configured to: receive a third address response packet, where the third address response packet includes the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or
receive the host routing information that is generated by the second layer-3 gateway device based on the third address response packet and that is broadcast by the second layer-3 gateway device.

With reference to any one of the third aspect or the possible implementations of the third aspect, in a seventh possible implementation of the third aspect, after the receiving unit receives the third address response packet and the broadcast host routing information, based on the host routing information, the processing unit is further configured to:
select, based on a priority order of the host routing information included in the third address response packet and the host routing information broadcast by the second layer-3 gateway device, host routing information used for forwarding a traffic packet destined for the first host or acting as an ARP proxy for the first host.

With reference to any one of the third aspect or the possible implementations of the third aspect, in an eighth possible implementation of the third aspect, the data center further includes a layer-2 gateway device that is connected between the second layer-3 gateway device and a host managed by the second layer-3 gateway device; and

the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or
the VTEP identifier of the next hop is a VTEP identifier of the second layer-3 gateway device.

With reference to any one of the third aspect or the possible implementations of the third aspect, in a ninth possible implementation of the third aspect, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

According to a fourth aspect, a communications apparatus for a Virtual Extensible Local Area Network VXLAN is provided, where a data center of the VXLAN includes a second layer-3 gateway device, the communications apparatus is the second layer-3 gateway device, and the apparatus includes a processing unit and a sending unit, where
the processing unit is configured to generate host routing information, where the host routing information includes an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host; and
the sending unit is configured to send the host routing information to another layer-3 gateway device in the data center.

With reference to the fourth aspect, in a first possible implementation of the fourth aspect, the another layer-3 gateway device includes a first layer-3 gateway device, the second layer-3 gateway device manages the first host, and the communications apparatus further includes a receiving unit, where
the receiving unit is configured to receive a second address request packet broadcast by the first layer-3 gateway device, where in the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device;
the sending unit is further configured to broadcast the second address request packet to a host managed by the second layer-3 gateway device;
the receiving unit is further configured to receive a second address response packet, where in the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host; and
the processing unit is further configured to: obtain the IP address of the first host from the source IP address in the received second address response packet, and obtain the MAC address of the first host from the source MAC address in the received second address response packet; and
use a VTEP identifier of the second layer-3 gateway device as the VTEP identifier of the next hop, or when the second address response packet includes a source VTEP identifier and a destination VTEP identifier, obtain the VTEP identifier of the next hop from the source VTEP identifier in the received second address response packet, where the source VTEP identifier is a VTEP identifier of a layer-2 gateway device between the second layer-3 gateway device and the first host, and the destination VTEP identifier is a VTEP identifier of the second layer-3 gateway device.

Optionally, the sending unit is further configured to send the second address response packet to the first layer-3 gateway device.

With reference to any one of the fourth aspect or the possible implementation of the fourth aspect, in a second possible implementation of the fourth aspect, the another layer-3 gateway device includes a first layer-3 gateway device, the first layer-3 gateway device manages a third host, and the second layer-3 gateway device manages the first host, where
the receiving unit is further configured to receive a third address request packet that is from the third host and that is broadcast by the first layer-3 gateway device, where in the third address request packet, a source IP address is an IP address of the third host, a source MAC address is a MAC address of the third host, and a destination IP address is the IP address of the first host;
the sending unit is further configured to broadcast the third address request packet to a host managed by the second layer-3 gateway device;
the receiving unit is further configured to receive a third address response packet, where in the third address response packet, a destination IP address is the IP address of the third host, a destination MAC address is the MAC address of the third host, a source IP address is the IP address of the first host, and a source MAC address is the MAC address of the first host; and
the processing unit is further configured to: obtain the IP address of the first host from the source IP address in the third address response packet, and obtain the MAC address of the first host from the source MAC address in the third address response packet; and
use a VTEP identifier of the second layer-3 gateway device as the VTEP identifier of the next hop, or when the second address response packet includes a source VTEP identifier and a destination VTEP identifier, obtain the VTEP identifier of the next hop from the source VTEP identifier in the received third address response packet, where the source VTEP identifier is a layer-2 gateway device between the second layer-3 gateway device and the first host, and the destination VTEP identifier is a VTEP identifier of the second layer-3 gateway device.

Optionally, the sending unit is further configured to send the third address response packet to the first layer-3 gateway device.

With reference to any one of the fourth aspect or the possible implementations of the fourth aspect, in a third possible implementation of the fourth aspect, before the generation unit generates the host routing information, the processing unit is further configured to:
obtain the IP address of the first host and the MAC address of the first host based on an ARP entry of the first host; and
determine a VTEP identifier of the second layer-3 gateway device as the VTEP identifier of the next hop, or when a MAC entry of the first host exists, determine a VTEP identifier indicated by the MAC entry as the VTEP identifier of the next hop.

With reference to any one of the fourth aspect or the possible implementations of the fourth aspect, in a fourth possible implementation of the fourth aspect, the sending unit is further configured to:
send the host routing information by using a neighbor relationship established between the second layer-3 gateway device and the another layer-3 gateway device; or
send the host routing information to a route reflector by using a neighbor relationship established between the second layer-3 gateway device and the route reflector, so that the route reflector sends the host routing information to the another layer-3 gateway device.

With reference to any one of the fourth aspect or the possible implementations of the fourth aspect, in a fifth possible implementation of the fourth aspect, the data center further includes a layer-2 gateway device that is connected between the second layer-3 gateway device and a host managed by the second layer-3 gateway device; and
the second layer-3 gateway device manages the first host, the VTEP identifier of the next hop is a VTEP identifier of the layer-2 gateway device, and the second layer-3 gateway device acts as a route reflector between the first layer-3 gateway device and the layer-2 gateway device; or the VTEP identifier of the next hop is a VTEP identifier of the second layer-3 gateway device.

With reference to any one of the fourth aspect or the possible implementations of the fourth aspect, in a sixth possible implementation of the fourth aspect, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

According to a fifth aspect, a communications apparatus for a VXLAN is provided, including a memory and a processor, where the memory is configured to store an instruction, the processor is configured to execute the instruction stored in the memory, and when the processor executes the instruction stored in the memory, the execution enables the processor to perform the method according to any one of the first aspect or the possible implementations of the first aspect.

According to a sixth aspect, a communications apparatus for a VXLAN is provided, including a memory and a processor, where the memory is configured to store an instruction, the processor is configured to execute the instruction stored in the memory, and when the processor executes the instruction stored in the memory, the execution enables the processor to perform the method according to any one of the second aspect or the possible implementations of the second aspect.

According to a seventh aspect, a computer storage medium is provided, where the computer storage medium stores program code, and the program code is used to instruct to perform the method according to any one of the first aspect or the possible implementations of the first aspect.

According to an eighth aspect, a computer storage medium is provided, where the computer storage medium stores program code, and the program code is used to instruct to perform the method according to any one of the second aspect or the possible implementations of the second aspect.

According to a ninth aspect, a data center of a VXLAN is provided, including a first layer-3 gateway device and a second layer-3 gateway device, where the first layer-3 gateway device may perform corresponding functions of the first layer-3 gateway device in any one of the first aspect or the possible implementations of the first aspect, and the second layer-3 gateway device may perform corresponding functions of the second layer-3 gateway device in any one of the second aspect or the possible implementations of the second aspect.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show only some embodiments of the present invention, and a person of ordinary skill in the art may still derive other drawings from these accompanying drawings without creative efforts.
FIG. 1 is a schematic block diagram of an application scenario according to an embodiment of this application;
FIG. 2 is a schematic flowchart of a communication method for a VXLAN according to an embodiment of this application;
FIG. 3 is a schematic flowchart of a communication method for a VXLAN according to an embodiment of this application;
FIG. 4 is a schematic flowchart of a communication method for a VXLAN according to an embodiment of this application;
FIG. 5 is a schematic flowchart of a communication method for a VXLAN according to an embodiment of this application;
FIG. 6 is a schematic flowchart of a communication method for a VXLAN according to an embodiment of this application;
FIG. 7 is a schematic flowchart of a communication method for a VXLAN according to an embodiment of this application;
FIG. 8 is a schematic block diagram of a communications apparatus for a VXLAN according to an embodiment of this application;
FIG. 9 is a schematic block diagram of a communications apparatus for a VXLAN according to an embodiment of this application;
FIG. 10 is a schematic block diagram of a communications apparatus for a VXLAN according to an embodiment of this application; and
FIG. 11 is a schematic block diagram of a communications apparatus for a VXLAN according to an embodiment of this application.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

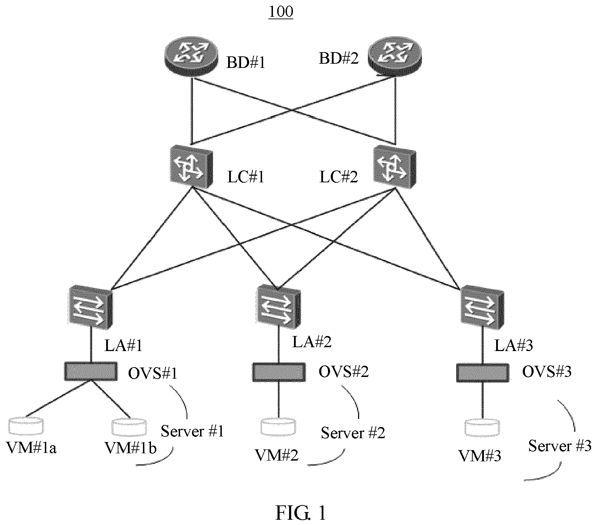

FIG. 1 is a schematic diagram of a communications system 100 according to an embodiment of this application. As shown in FIG. 1, the communications system 100 may include boundary (Boundary) routers BD#1 and BD#2, local center (Local Center, LC) switches LC#1 and LC#2, local access (Local Access, LA) switches LA#1, LA#2, and LA#3, a server #1, a server #2, and a server #3.

The BD#1 and the BD#2 may have a same AS number, the LC#1 and the LC#1 may have a same AS number, and the LA#1, the LA#2, and the LA#3 may have a same AS number.

The BD#1 and the BD#2 may forward traffic between a virtual machine in the communications system 100 and the outside (that is, the Internet outside the communications system 100).

Generally, the LC#1 and the LC#2 are ordinary layer-3 routing forwarding devices, and are not layer-3 gateway devices for virtual machines in servers, that is, not acting as first layer-3 gateway devices or second layer-3 gateway devices that are mentioned in the embodiments of this application. In this embodiment of this application, an example in which the LA#1, the LA#2, and the LA#3 act as layer-3 gateway devices for virtual machines in a server is mainly used for description. It should be noted that the LC#1 and the LC#2 may alternatively act as layer-3 gateway devices in a VXLAN. In this case, the LA or an OVS acts as a layer-2 gateway device in the VXLAN.

The server in this embodiment of this application may include an open virtual switch (Open VSwitch, OVS) and a virtual machine (Virtual machine, VM). The OVS is configured to control a VM that belongs to a same server as the OVS, for example, send a packet to the VM or forward a packet from the VM. One OVS may manage one or more VMs. Different VMs have different IP addresses and different MAC addresses.

For example, a VM#la has an Internet Protocol (Internal Protocol, IP) address 192.1.1.101 and a Media Access Control (Media Access Control, MAC) address 1-1-1, a VM#1b has an IP address 192.1.1.102 and a MAC address 2-2-2, a VM#2 has an IP address 192.1.1.103 and a MAC address 3-3-3, and a VM#3 has an IP address 192.1.1.104 and a MAC address 4-4-4.

For example, the server #1 includes an OVS#1, the VM#la, and the VM#1b, and the OVS#1 manages the VM#la and the VM#1b; the server #2 includes an OVS#2 and the VM#2, and the OVS#2 manages the VM#2; and the server #3 includes an OVS#3 and the VM#3, and the OVS#3 manages the VM#3.

The OVS#1, the OVS#2, and the OVS#3 may act as layer-2 gateway devices for the VMs. Each LA may establish a VXLAN tunnel with an OVS connected to the LA. Different OVSs have different VTEP identifiers. For example, the OVS#1 has a VTEP identifier 10.1.1.1, the OVS#2 has a VTEP identifier 20.1.1.1, and the OVS#3 has an XLAN tunnel end point (VXLAN Tunneling End Point, VTEP) identifier 30.1.1.1.

Alternatively, when the LA#1, the LA#2, and the LA#3 act as the layer-3 gateway devices for the VMs, the LA#1, the LA#2, and the LA#3 act as layer-2 gateway devices for the VMs, and the OVS#1, the OVS#2, and the OVS#3 are not used as the layer-2 gateway devices for the VMs.

The LA#1, the LA#2, and the LA#3 may have a same IP address, a same MAC address, and different VTEP identifiers.

For example, the LA#1, the LA#2, and the LA#3 have a same IP address 191.1.1.1 and a same MAC address 5-5-5, and the LA#1, the LA#2, and the LA#3 have different VTEP identifiers that are respectively 40.1.1.1, 50.1.1.1, and 60.1.1.1.

Certainly, when the LA#1, the LA#2, and the LA#3 have a same IP address and a same MAC address, the LA#1, the LA#2, and the LA#3 further respectively have different IP addresses and different MAC addresses.

For example, the LA#1, the LA#2, and the LA#3 have different IP addresses that are respectively 192.1.1.1.255.255.255.0, 192.1.1.2.255.255.255.0, and 192.1.1.3.255.255.255.0, and have different MAC addresses that are respectively 6-6-6, 7-7-7, and 8-8-8.

In this embodiment of this application, the LA#1, the LA#2, and the LA#3 may manage different VMs. For example, the LA#1, the LA#2, and the LA#3 may act as layer-3 gateway devices for virtual machines in a same subnet, and are configured to manage the virtual machines in different parts of the same subnet. Alternatively, the LA#1, the LA#2, and the LA#3 may act as layer-3 gateway devices for virtual machines in a server that are in different subnets, and are configured to manage the virtual machines in the different subnets.

A virtual IP of a layer-3 gateway may be deployed by using a Virtual Router Redundancy Protocol (Virtual Router Redundancy Protocol, VRRP), and a VXLAN interface of the layer-3 gateway may be referred to as a vbdif interface. Certainly, this embodiment of this application is not limited thereto.

It should be understood that although FIG. 1 shows only two BDs, three LAs, three servers, and the like, FIG. 1 is only for illustration instead of indicating that the communications system to which this application is applied is limited thereto. In the communications system to which this application is applied, various quantities of BDs, LAs, servers, and the like may be deployed as required.

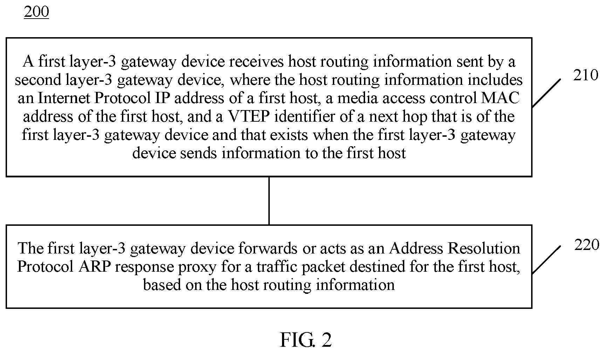

FIG. 2 is a schematic flowchart of a communication method 200 for a VXLAN according to an embodiment of this application. A data center of the VXLAN includes a first layer-3 gateway device and a second layer-3 gateway device.

As shown in FIG. 2, the method 200 may include step 210 and step 220.

Step 210: The first layer-3 gateway device receives host routing information sent by the second layer-3 gateway device, where the host routing information includes an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host.

Optionally, the host routing information may be broadcast by the second layer-3 gateway device by using a host routing protocol, or may be carried in a message (such as an address response packet) and specially sent to the first layer-3 gateway device.

Step 220: The first layer-3 gateway device forwards a traffic packet destined for the first host or acts as an Address Resolution Protocol ARP proxy for the first host, based on the host routing information.

Specifically, the host routing information includes the IP address of first host and the MAC address of the first host. Therefore, when receiving an address request packet in which a destination IP address is the IP address of the first host, the first layer-3 gateway device may obtain the MAC address of the first host from the host routing information, add the MAC address of the first host to an address response packet, and send the address response packet to a requesting party. Alternatively, when receiving a traffic packet in which a destination IP address is the IP address of the first host, the first layer-3 gateway device may obtain the VTEP identifier of the next hop from the host routing information, encapsulate the VTEP of the next hop into the traffic packet, and send the encapsulated traffic packet to the next hop.

Therefore, in this embodiment of this application, host routing information of a host is advertised between at least two layer-3 gateway devices. The host routing information includes an IP address of the host, a MAC address of the host, and a VTEP identifier of a next hop that is of a host routing receiving party and that exists when the host routing receiving party sends information to the host. A layer-3 gateway device receiving the host routing information forwards a packet destined for the host and acts as an ARP proxy for the host, based on the host routing information. Therefore, a quantity of packets that are used for obtaining a forwarding entry and that are broadcast between the at least two layer-3 gateway devices can be reduced, and backhaul traffic can be reduced.

Optionally, in the method shown in FIG. 2, the second layer-3 gateway device manages the first host, and a host managed by the first layer-3 gateway device is different from a host managed by the second layer-3 gateway device. The first layer-3 gateway device and the second layer-3 gateway device may be corresponding to the LA#1, the LA#2, or the LA#3 in the communications system 100, and the first layer-3 gateway device is different from the second layer-3 gateway device. The first host is a virtual machine managed by the LA#1, the LA#2, or the LA#3.

That a host managed by the first layer-3 gateway device is different from a host managed by the second layer-3 gateway device may mean that hosts managed by the two layer-3 gateway devices are all different, or that a host managed by the first layer-3 gateway device is different from a host managed by the second layer-3 gateway device may mean that some of hosts managed by the at least two layer-3 gateway devices are different. In this case, the first host belongs only to the second layer-3 gateway device. In other words, this embodiment of this application may be applied to a scenario of distributed layer-3 gateway devices. In this scenario, each layer-3 gateway device manages a different host. The host mentioned in this embodiment of this application may be referred to as a virtual machine. Compared with the scenario of distributed gateways, a scenario of a centralized gateway means that all layer-3 gateway devices manage a same host. In the scenario of a distributed gateway in this embodiment of this application, a traffic convergence and forwarding bottleneck with a centralized VXLAN layer-3 gateway device can be avoided.

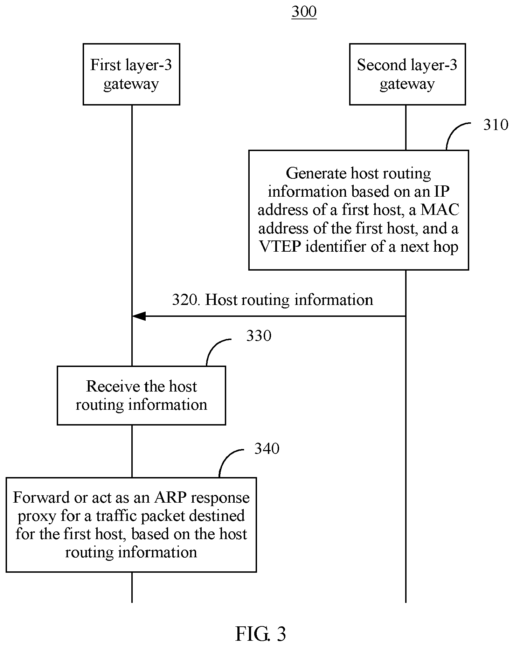

FIG. 3 is a schematic flowchart of a communication method 300 for a VXLAN according to an embodiment of this application. FIG. 3 is mainly applicable to a scenario in which host routing information is broadcast by using a host routing protocol. As shown in FIG. 3, the method 300 may include step 310, step 320, step 330, and step 340.

Step 310: A second layer-3 gateway device generates host routing information, where the host routing information includes an IP address of a first host, a MAC address of the first host, and a VTEP identifier of a next hop that is of a host routing information receiving party and that exists when the host routing information receiving party sends information to the first host.

Optionally, before generating the host routing information, the second layer-3 gateway device may obtain the IP address of the first host, the MAC address of the first host, and the VTEP identifier of the next hop that is of the host routing information receiving party and that exists when the host routing information receiving party sends information to the first host.

Specifically, the second layer-3 gateway device may determine, in a plurality of manners, the IP address of the first host, the MAC address of the first host, and the VTEP identifier of the next hop that is of the host routing information receiving party and that exists when the host routing information receiving party sends information to the first host. For example, the second layer-3 gateway device may obtain the information by using an ARP entry and a MAC entry that are related to the first host and that are stored in the second layer-3 gateway device. For another example, the second layer-3 gateway device may obtain the information by using an address response packet that carries related information of the first host and that passes the second layer-3 gateway device.

Step 320: The second layer-3 gateway device sends the host routing information to another layer-3 gateway device in a data center, so that after receiving the host routing information, the another layer-3 gateway device forwards a traffic packet destined for the first host or acts as an ARP proxy for the first host, based on the host routing information.

Optionally, the second layer-3 gateway device sends the host routing information in a broadcast manner.

Optionally, the second layer-3 gateway device broadcasts a network segment route of the first host. In this case, the another layer-3 gateway device may store the network segment route, and when a destination IP address in a received traffic packet can match the network segment route, and the another layer-3 gateway device does not store host routing information corresponding to the destination IP address, the another layer-3 gateway device may send an address request packet destined for the destination IP address, to trigger obtainment of the host routing information corresponding to the destination IP address.

Optionally, the second layer-3 gateway device sends the host routing information by using a neighbor relationship established between the second layer-3 gateway device and the another layer-3 gateway device. For example, the second layer-3 gateway device stores an entry of a layer-3 gateway device that has a neighbor relationship with the second layer-3 gateway device, and then sends the host routing information to the layer-3 gateway device that has a neighbor relationship with the second layer-3 gateway device.

Alternatively, the second layer-3 gateway device sends the host routing information to a route reflector by using a neighbor relationship established between the second layer-3 gateway device and the route reflector, so that the route reflector sends the host routing information to the another layer-3 gateway device.

For example, the second layer-3 gateway device may send the host routing information to a route reflector that has established a neighbor relationship with the second layer-3 gateway device. The route reflector stores an entry of a layer-3 gateway device that has established a neighbor relationship with the route reflector, and sends the host routing information to another layer-3 gateway device (exclusive of the second layer-3 gateway device) that has a neighbor relationship with the route reflector.

A neighbor relationship between gateway devices may be statically configured, and the route reflector does not need to perform VXLAN encapsulation or decapsulation, but performs a packet forwarding function between the gateway devices.

Step 340: A first layer-3 gateway device receives the host routing information sent by the second layer-3 gateway device.

Specifically, the first layer-3 gateway device may receive the host routing information broadcast by the second layer-3 gateway device.

Step 350: The first layer-3 gateway device forwards a traffic packet destined for the first host or acts as an Address Resolution Protocol ARP proxy for the first host, based on the host routing information.

Therefore, in this embodiment of this application, host routing information of a host is advertised between at least two layer-3 gateway devices. The host routing information includes an IP address of the host, a MAC address of the host, and a VTEP identifier of a next hop that is of a host routing receiving party and that exists when the host routing receiving party sends information to the host. A layer-3 gateway device receiving the host routing information forwards a packet destined for the host and acts as an ARP proxy for the host, based on the host routing information. Therefore, a quantity of packets that are used for obtaining a forwarding entry and that are broadcast between the at least two layer-3 gateway devices can be reduced, and backhaul traffic can be reduced. Further, routing information of a host is advertised between layer-3 gateway devices without dependence on a controller for delivering a static forwarding entry, so that the following problem can be avoided: The forwarding entry cannot be updated in a timely manner because the controller delivers the static forwarding entry to the layer-3 gateway devices and the host.

Optionally, in this embodiment of this application, the data center further includes a first layer-2 gateway device and a second layer-2 gateway device. The first layer-2 gateway device acts as a layer-2 gateway device between the first layer-3 gateway device and a host managed by the first layer-3 gateway device, and the second layer-2 gateway device acts as a layer-2 gateway device between the second layer-3 gateway device and a host managed by the second layer-3 gateway device. That is, the layer-2 gateway device and the layer-3 gateway device in this embodiment of this application are separate. For example, in the communications system 100 shown in FIG. 1, the LA acts as a layer-3 gateway device, and the OVS acts as a layer-2 gateway device.

Optionally, in a scenario in which the layer-2 gateway device and the layer-3 gateway device are separate, the VTEP identifier of the next hop that is of the another layer-3 gateway device and that exists when the another layer-3 gateway device sends information to the second layer-3 gateway device is a VTEP identifier of the second layer-2 gateway device. The second layer-3 gateway device acts as a route reflector between the first layer-3 gateway device and the second layer-2 gateway device. Alternatively, the VTEP identifier of the next hop that is of the another layer-3 gateway device and that exists when the another layer-3 gateway device sends information to the second layer-3 gateway device is a VTEP identifier of the second layer-3 gateway device.

Optionally, in this embodiment of this application, each of the first layer-3 gateway device and the second layer-3 gateway device further provides a function of a layer-2 gateway device. For example, in the communications system 100 shown in FIG. 1, the LA acts as both a layer-2 gateway device and a layer-3 gateway device.

Certainly, other scenarios also apply in this embodiment of this application. For example, there is further a layer-2 gateway device between the first layer-3 gateway device and a host managed by the first layer-3 gateway device, that is, the first layer-3 gateway device does not provide a function of a layer-2 gateway device, but the second layer-3 gateway device provides a function of a layer-2 gateway device. For another example, there is further a layer-2 gateway device between the second layer-3 gateway device and a host managed by the second layer-3 gateway device, that is, the second layer-3 gateway device does not provide a function of a layer-2 gateway device, but the first layer-3 gateway device provides a function of a layer-2 gateway device.

In this embodiment of this application, after obtaining the host routing information of the first host, the first layer-3 gateway device may act as an ARP proxy for the first host.

Specifically, the first layer-3 gateway device receives a first address request packet sent by a second host. In the first address request packet, a source IP address is an IP address of the second host, a source MAC address is a MAC address of the second host, and a destination IP address is the IP address of the first host. The second host is a host managed by the first layer-3 gateway device. The first layer-3 gateway device determines that the destination IP address in the first address request packet matches the IP address of the first host in the host routing information, obtains the MAC address of the first host based on the host routing information, and sends a first address response packet to the second host. In the first address response packet, a source IP address is the IP address of the first host, a source MAC address is the MAC address of the first host, a destination IP address is the IP address of the second host, and a destination MAC address is the MAC address of the second host.

In this application, the address request packet may be referred to as an ARP request packet, and the address response packet may be referred to as an ARP response packet.

In this embodiment of this application, after obtaining the host routing information of the first host, the first layer-3 gateway device may forward a packet destined for the first host.

Specifically, the first layer-3 gateway device receives a traffic packet sent by a second host. In the traffic packet, a source IP address is an IP address of the second host, a source MAC address is a MAC address of the second host, a destination IP address is the IP address of the first host, and a destination MAC address is the MAC address of the first host. The second host is a host managed by the first layer-3 gateway device. The first layer-3 gateway device determines that the destination IP address in the traffic packet matches the IP address of the first host in the host routing information. The first layer-3 gateway device obtains the VTEP identifier of the next hop of the first layer-3 gateway device based on the host routing information, encapsulates the VTEP identifier of the next hop as a destination VTEP identifier in the traffic packet, and sends the packet to the next hop.

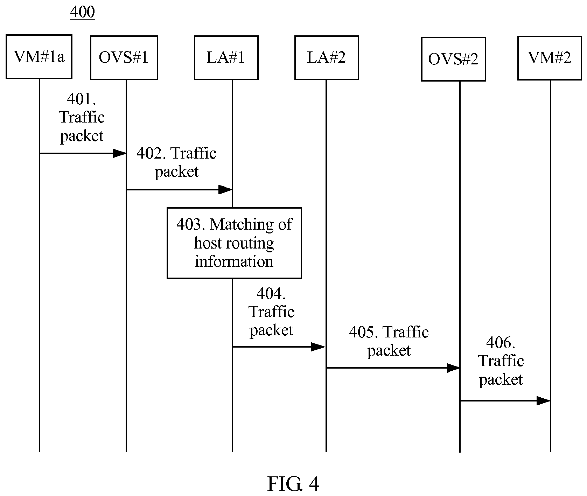

For ease of understanding, by using the scenario shown in FIG. 1 as an example and with reference to FIG. 4, the following describes how a packet is forwarded based on host routing information. It is assumed that a layer-3 gateway device and a layer-2 gateway device are separate, that is, the LA acts as a layer-3 gateway device, and the OVS acts as a layer-2 gateway device. It is assumed that the VM#la is a second host, the VM#2 is a first host, the LA#1 is a first layer-3 gateway, and the LA#2 is a second layer-3 gateway.

Step 401: The VM#la sends a traffic packet, where in the traffic packet, a source IP address is an IP address of the VM#la, a source MAC address is a MAC address of the VM#la, a destination IP address is an IP address of the VM#2, and a destination MAC address is a MAC address of the VM#2.

Step 402: After receiving the traffic packet from the VM#1, the OVS#1 performs VXLAN encapsulation, where a source VTEP identifier is a VTEP identifier of the OVS#1, and a destination VTEP identifier is a VTEP identifier of the LA#1; and sends the encapsulated traffic packet to the LA#1.

Step 403: After receiving the traffic packet sent by the OVS#1, the LA#1 performs VXLAN decapsulation, determines the destination IP address in the traffic packet, searches host routing information stored in the LA#1, determines that host routing information corresponding to the destination IP address exists, and searches for a VTEP identifier of a next hop based on the host routing information, where the VTEP identifier of the next hop is a VTEP identifier of the LA#2.

Step 404: The LA#1 performs VXLAN encapsulation on the traffic packet, where the source VXLAN identifier is the VTEP identifier of the LA#1, and the destination VTEP identifier is the VTEP identifier of the LA#2; and sends the encapsulated traffic packet to the LA#2.

Step 405: After receiving the traffic packet sent by the LA#1, the LA#2 performs VXLAN decapsulation, and performs VXLAN encapsulation again, where the source VTEP identifier is the VTEP identifier of the LA#2, and the destination VTEP identifier is a VTEP identifier of the OVS#2.

Step 406: The OVS#2 performs VXLAN decapsulation on the traffic packet, and sends the traffic packet to the VM#2.

It should be understood that although the VTEP identifier of the next hop shown in FIG. 4 is the VTEP identifier of the LA#2, the VTEP identifier of the next hop may still be the VTEP identifier of the OVS#2. In this case, the LA#2 may act as a route reflector between the LA#1 and the OVS#2, that is, the LA#2 is configured only to forward a packet between the LA#1 and the OVS#2 but not to perform VXLAN encapsulation and decapsulation.

Optionally, in this embodiment of this application, the second layer-3 gateway device may obtain the host routing information in a plurality of manners. Three implementations are used as examples for description in this embodiment of this application.

### Implementation 1

In an ARP missing (MISS) scenario, if the first layer-3 gateway device needs to obtain an ARP entry of a host (for example, the first layer-3 gateway device needs to send a traffic packet to the host, but does not store the ARP entry corresponding to the host), the first layer-3 gateway device may broadcast an address request packet. A server to which the host belongs may be a silent server, that is, the server does not actively send a packet.

It is assumed that the second layer-3 gateway device manages the first host, the first layer-3 gateway device has a first IP address, a first MAC address corresponding to the first IP address, a second IP address, and a second MAC address corresponding to the second IP address, and the second layer-3 gateway device has the first IP address, the first MAC address, a third IP address, and a third MAC address corresponding to the third IP address. If in the address request packet, a source IP address is the first IP address, and a source MAC address is the first MAC address, the second layer-3 gateway device receiving the address request packet considers that the IP address and the MAC address are those of the second layer-3 gateway device, and consequently a loop occurs. Therefore, the address request packet sent by the first layer-3 gateway device may carry an IP address and a MAC address that are different from those of another layer-3 gateway device, that is, carry the second IP address and the second MAC address. For ease of description, in the following, an IP address (the second IP address and the third IP address) exclusive to each gateway device may be referred to as a real IP address, a MAC address (the second MAC address and the third MAC address) exclusive to each gateway device may be referred to as a real MAC address, an IP address (the first IP address) shared by a plurality of gateway devices may be referred to as a virtual IP address, and a MAC address (the first MAC address) shared by the plurality of gateway devices may be referred to as a virtual MAC address.

Specifically, the first layer-3 gateway device broadcasts a second address request packet. In the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is an IP address of the first host. The second layer-3 gateway device receives the second address request packet broadcast by the first layer-3 gateway device. The second layer-3 gateway device broadcasts the second address request packet to a host managed by the second layer-3 gateway device. The second layer-3 gateway device receives a second address response packet that is from the first host.

Optionally, when a layer-2 gateway device is connected between the first host and the second layer-3 gateway device, the second address response packet received by the second layer-3 gateway device is forwarded by the layer-2 gateway device connected between the second layer-3 gateway device and the first host. In the second address response packet, a destination IP address is the IP address exclusive to the first layer-3 gateway device, a destination MAC address is the MAC address exclusive to the first layer-3 gateway device, a destination VTEP identifier is a VTEP identifier of the second layer-3 gateway device, a source IP address is the IP address of the first host, a source MAC address is a MAC address of the first host, and a source VTEP identifier is a VTEP identifier of the layer-2 gateway device connected between the second layer-3 gateway device and the first host. The second layer-3 gateway device obtains the IP address of the first host from the source IP address in the received second address response packet; obtains the MAC address of the first host from the source MAC address in the received second address response packet; uses the VTEP identifier of the second layer-3 gateway device as a VTEP identifier of a next hop that is of a host routing information receiving party and that exists when the host routing information receiving party sends information to the first host, or uses a VTEP identifier indicated by the source VTEP identifier as a VTEP identifier of a next hop; generates host routing information of the first host; and broadcasts the host routing information to another layer-3 gateway device in a data center.

Optionally, when the second layer-3 gateway device provides a function of a layer-2 gateway for the first host, that is, when no layer-2 gateway device exists between the second layer-3 gateway device and the first host, in the second address response packet received by the second layer-3 gateway device, a destination IP address is the IP address exclusive to the first layer-3 gateway device, a destination MAC address is the MAC address exclusive to the first layer-3 gateway device, a source IP address is the IP address of the first host, and a source MAC address is a MAC address of the first host. The second layer-3 gateway device obtains the IP address of the first host from the source IP address in the received second address response packet; obtains the MAC address of the first host from the source MAC address in the received second address response packet; uses a VTEP identifier of the second layer-3 gateway device as a VTEP identifier of a next hop that is of a host routing information receiving party and that exists when the host routing information receiving party sends information to the first host; generates host routing information of the first host; and broadcasts the host routing information to another layer-3 gateway device in a data center.

In this embodiment of this application, the second layer-3 gateway device may further send the second address response packet to the first layer-3 gateway device. In the second address response packet received by the first layer-3 gateway device, the destination IP address is the IP address exclusive to the first layer-3 gateway device, the destination MAC address is the MAC address exclusive to the first layer-3 gateway device, the destination VTEP identifier is the VTEP identifier exclusive to the first layer-3 gateway device, the source IP address is the IP address of the first host, the source MAC address is the MAC address of the first host, and the source VTEP identifier is the VTEP identifier of the second layer-3 gateway device. The first layer-3 gateway device may obtain the host routing information of the first host from the second address response packet, and store the host routing information. The second address response packet received by the first layer-3 gateway device includes the host routing information. Specifically, the first layer-3 gateway device obtains the IP address of the first host from the source IP address in the received second address response packet; obtains the MAC address of the host from the source MAC address in the received second address response packet; and obtains, from the source VTEP identifier in the received second address response packet, the VTEP identifier when the first layer-3 gateway device sends information to the first host.

In this embodiment of this application, if the first layer-3 gateway device not only receives the host routing information of the first host broadcast by the second layer-3 gateway device, but also obtains the routing information of the first host from the second address response packet, the first layer-3 gateway device may set priorities for the received broadcast host routing information and the host routing information obtained from the second address response packet. If a priority of the received broadcast host routing information is higher than a priority of the host routing information obtained from the second address response packet, the first layer-3 gateway device may act as an ARP proxy and forward a traffic packet based on the received broadcast host routing information. If a priority of the received broadcast host routing information is lower than a priority of the host routing information obtained from the second address response packet, the first layer-3 gateway device may act as an ARP proxy and forward a traffic packet based on the host routing information obtained from the second address response packet.

In this embodiment of this application, if a device other than the first layer-3 gateway device (which may be referred to as a third layer-3 gateway device) receives the host routing information broadcast by the second layer-3 gateway device, the device may store the host routing information, and acts as an ARP proxy or forward a traffic packet based on the host routing information.

It should be understood that the first layer-3 gateway device, the second layer-3 gateway device, and the third layer-3 gateway device that are mentioned in this embodiment of this application are equivalent to each other, and any layer-3 gateway device may have functions of other layer-3 gateway devices.

For example, the foregoing describes how the second layer-3 gateway obtains the host routing information of the first host by using an example in which the first layer-3 gateway device initiates an address request packet. However, in this application, another layer-3 gateway device may send an address request packet to cause the second layer-3 gateway device to obtain the host routing information of the first host, and then the second layer-3 gateway device broadcasts the host routing information, so that the host routing information reaches the first layer-3 gateway device and the another layer-3 gateway device.

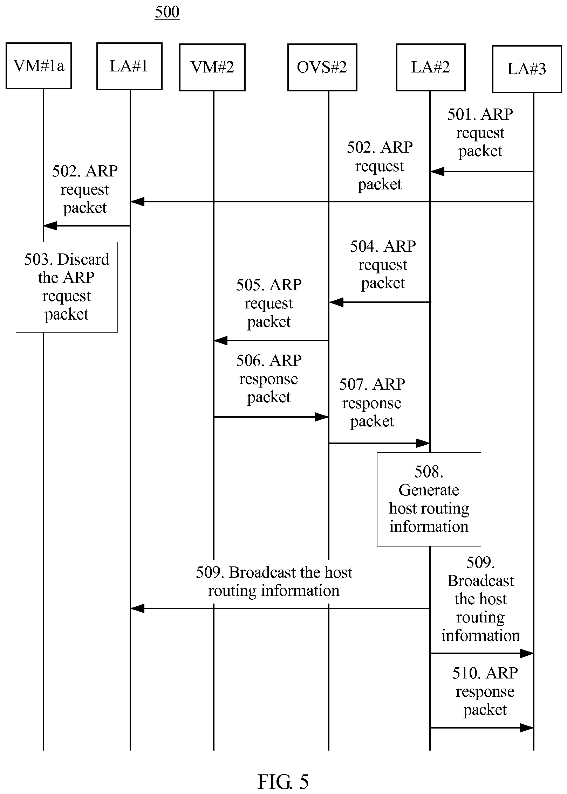

For ease of understanding, the following describes Implementation 1 in detail with reference to FIG. 5.

In FIG. 5, it is assumed that the LA#3 acts as a layer-2 gateway device and a layer-3 gateway device for a VM managed by the LA#3, the LA#2 acts as a layer-3 gateway device for the VM#2, the OVS#2 acts as a layer-2 gateway device for the VM#2, and the LA#1 acts as a layer-2 gateway device and a layer-3 gateway device for a VM managed by the LA#1.

Step 501: If the LA#3 needs to obtain an ARP entry related to an IP address, assuming that the IP address is an IP address of the VM#2, the LA#3 may generate an ARP request packet, where the ARP request carries a real IP address and a real MAC address of the LA#3. The LA#3 performs VXLAN encapsulation on the ARP request packet, and broadcasts the packet. The LA#3 may perform VXLAN encapsulation by means of head-end replication, or perform VXLAN encapsulation in a multicast manner.

Head-end replication means replicating the ARP request packet to obtain a plurality of replications, each replication carries one VTEP identifier, and different replications carry different VTEP identifiers. For example, VTEP identifiers of the LA#2 and the LA#1 that act as layer-3 gateway devices and that are connected to the LA#3 need to be carried. If the LA#3 is further connected to a layer-2 gateway device, a VTEP identifier of the layer-2 gateway device may further need to be carried.

Multicast means encapsulating a destination VTEP identifier in the ARP request packet as a multicast VTEP identifier.

In this embodiment of this application, the multicast VTEP identifier may be corresponding to a multicast group. When members in the multicast group communicate with each other, the destination VTEP identifier may carry the multicast VTEP identifier. After receiving a packet carrying the multicast VTEP identifier, a member in the multicast group determines that the packet carries the multicast VTEP identifier, and may perform VXLAN decapsulation and corresponding subsequent processing on the packet. The multicast group corresponding to the multicast VTEP identifier in the method 500 may include the LA#1, the LA#2, and the LA#3.

Step 502: After receiving the ARP request packet sent by the LA#3, the LA#1 may perform VXLAN decapsulation, and send the packet to a VM managed by the LA#1, for example, the VM#la.

Step 503: After receiving the ARP request packet, if the VM#la finds that a destination IP address in the ARP request packet is not an IP address of the VM#la, the VM#la discards the ARP request packet.

Step 504: After receiving the ARP request packet sent by the LA#3, the LA#2 may perform VXLAN decapsulation on the ARP request packet; perform VXLAN encapsulation again, where a source VTEP identifier is a VTEP identifier of the LA#2, and a destination VTEP identifier is a VTEP identifier of the OVS#2; and send the VXLAN-encapsulated packet.

Step 505: After receiving the ARP request packet, the OVS#2 decapsulates the ARP request packet, and sends the packet to a VM managed by the OVS#2.

Step 506: After receiving the ARP request packet, if the VM#2 finds that the destination IP address is the IP address of the VM#2, the VM#2 generates and sends an ARP response packet, where in the ARP response packet, a source IP address is the IP address of the VM#2, a source MAC address is a MAC address of the VM#2, a destination IP address is the real IP address of the LA#3, and a destination MAC address is the real MAC address of the LA#3.

Step 507: After receiving the ARP response packet, the OVS#2 performs VXLAN encapsulation by using the OVS#2 as a source VTEP identifier in the ARP response packet and using the VTEP of the LA#2 as a destination VTEP identifier in the ARP response packet; and sends the packet to the LA#2.

Step 508: The LA#2 receives the ARP response packet, where in the ARP response packet, the source IP address is the IP address of the VM#2, the source MAC address is the MAC address of the VM#2, the source VTEP identifier is the VTEP identifier of the OVS#2, the destination IP address is the real IP address of the LA#3, the destination MAC address is the real MAC address of the LA#3, and the destination VTEP identifier is a real VTEP identifier of the LA#3; and the LA#2 may obtain the IP address and the MAC address of the VM#2 based on the ARP response packet; obtain, based on the ARP response packet, a VTEP identifier of a next hop that is of a host routing information receiving party and that exists when the host routing information receiving party sends information to the VM#2; and generate host routing information based on the MAC address and the IP address of the VM#2 and the VTEP identifier of the next hop. The VTEP identifier of the next hop may be the VTEP identifier of the LA#2 or the VTEP identifier of the OVS#2.

Step 509: The LA#2 broadcasts the host routing information, and after receiving the host routing information, the LA#1 and the LA#3 may store the host routing information, to subsequently forward a traffic packet destined for the VM#2 and act as an ARP proxy for the VM#2.

Step 510: The LA#2 sends the ARP response packet to the LA#3, where in the ARP response packet, the source IP address is the IP address of the VM#2, the source MAC address is the MAC address of the VM#2, the source VTEP identifier is the VTEP identifier of the LA#2, the destination IP address is the real IP address of the LA#3, the destination MAC address is the real MAC address of the LA#3, and the destination VTEP identifier is the VTEP identifier of the LA#3. After receiving the ARP response packet, the LA#3 may obtain the IP address and the MAC address of the VM#2 from the response packet; obtain, from the response packet, the VTEP identifier of the next hop that is of the host routing information receiving party and that exists when the host routing information receiving party sends information to the VM#2, that is, the VTEP identifier of the LA#2; and generate the host routing information based on the MAC address and the IP address of the VM#2 and the VTEP identifier of the next hop. The LA#3 may set priorities for the host routing information obtained from the ARP response packet and the received host routing information broadcast by the LA#2, and forward a traffic packet destined for the VM#2 and act as an ARP proxy for the VM#2, by using host routing information with a higher priority. Alternatively, the LA#3 may directly obtain the routing information of the VM#2 from the response packet, or obtain the routing information of the VM#2 from the host routing information broadcast by the LA#2.

### Implementation 2

The second layer-3 gateway device manages the first host. The first layer-3 gateway device manages a third host. The first layer-3 gateway device receives a third address request packet sent by the third host. In the third address request packet, a source IP address is an IP address of the third host, a source MAC address is a MAC address of the third host, and a destination IP address is an IP address of the first host. When the first host needs to send a traffic packet to the first host, but does not store an ARP entry corresponding to the first host, the first host may trigger the third address request packet.

If the first layer-3 gateway device determines that the first layer-3 gateway device stores host routing information corresponding to the IP address of the first host, the first layer-3 gateway device may obtain a MAC address of the first host from the host routing information, generate an address response packet, and send the address response packet to the third host. In the address response packet, a source IP address is the IP address of the first host, a source MAC address is the MAC address of the first host, a destination IP address is the IP address of the third host, and a destination MAC address is the MAC address of the third host.

If the first layer-3 gateway device determines that the first layer-3 gateway device does not store host routing information corresponding to the IP address of the first host, the first layer-3 gateway device broadcasts the third address request packet. The second layer-3 gateway device receives the third address request packet that is from the third host and that is broadcast by the first layer-3 gateway device. The second layer-3 gateway device broadcasts the third address request packet to a host managed by the second layer-3 gateway device. The second layer-3 gateway device receives a third address response packet sent by the first host.

Optionally, when a layer-2 gateway device is connected between the first host and the second layer-3 gateway device, in the third address response packet, a destination IP address is the IP address of the third host, a destination MAC address is the MAC address of the third host, a destination VTEP identifier is a VTEP identifier of the second layer-3 gateway device, a source IP address is the IP address of the first host, a source MAC address is a MAC address of the first host, and a source VTEP identifier is a VTEP identifier of the layer-2 gateway device connected between the second layer-3 gateway device and the first host. The second layer-3 gateway device obtains the IP address of the first host from the source IP address in the received third address response packet; obtains the MAC address of the first host from the source MAC address in the received third address response packet; uses the VTEP identifier of the second layer-3 gateway device as a VTEP identifier of a next hop that is of a host routing information receiving party and that exists when the host routing information receiving party sends information to the first host, or uses a VTEP identifier indicated by the source VTEP identifier as a VTEP identifier of a next hop; generates the host routing information of the first host; and broadcasts the host routing information to another layer-3 gateway device in a data center.

Optionally, when the second layer-3 gateway device provides a function of a layer-2 gateway for the first host, that is, when no layer-2 gateway device exists between the second layer-3 gateway device and the first host, in the third address response packet received by the second layer-3 gateway device, a destination IP address is the IP address of the third host, a destination MAC address is the MAC address of the third host, a source IP address is the IP address of the first host, and a source MAC address is a MAC address of the first host. The second layer-3 gateway device obtains the IP address of the first host from the source IP address in the received third address response packet; obtains the MAC address of the first host from the source MAC address in the received third address response packet; uses a VTEP identifier of the second layer-3 gateway device as a VTEP identifier of a next hop that is of a host routing information receiving party and that exists when the host routing information receiving party sends information to the first host; generates the host routing information of the first host; and broadcasts the host routing information.

In this embodiment of this application, the second layer-3 gateway device may further send the third address response packet to the first layer-3 gateway device. In the third address response packet, the destination IP address is the IP address of the third host, the destination MAC address is the MAC address of the third host, the destination VTEP identifier is a VTEP identifier exclusive to the first layer-3 gateway device, the source IP address is the IP address of the first host, the source MAC address is the MAC address of the first host, and the source VTEP identifier is the VTEP identifier of the second layer-3 gateway device. The first layer-3 gateway device may obtain the host routing information of the first host from the second address response packet, and store the host routing information. The third address response packet received by the first layer-3 gateway device includes the host routing information. Specifically, the first layer-3 gateway device obtains the IP address of the first host from the source IP address in the received third address response packet; obtains the MAC address of the host from the source MAC address in the received third address response packet; and obtains, from the source VTEP identifier in the received third address response packet, the VTEP identifier of the first layer-3 gateway device when the first layer-3 gateway device sends information to the first host.

In this embodiment of this application, if the first layer-3 gateway device not only receives the host routing information of the first host broadcast by the second layer-3 gateway device, but also obtains the routing information of the first host from the third address response packet, the first layer-3 gateway device may set priorities for the received broadcast host routing information and the host routing information obtained from the third address response packet. If a priority of the received broadcast host routing information is higher than a priority of the host routing information obtained from the third address response packet, the first layer-3 gateway device may act as an ARP proxy and forward a traffic packet based on the received broadcast host routing information. If a priority of the received broadcast host routing information is lower than a priority of the host routing information obtained from the third address response packet, the first layer-3 gateway device may act as an ARP proxy and forward a traffic packet based on the host routing information obtained from the third address response packet.

In this embodiment of this application, if a device other than the first layer-3 gateway device (which may be referred to as a third layer-3 gateway device) receives the host routing information broadcast by the second layer-3 gateway device, the device may store the host routing information, and acts as an ARP proxy or forwards a traffic packet based on the host routing information.

It should be understood that the first layer-3 gateway device, the second layer-3 gateway device, and the third layer-3 gateway device that are mentioned in this embodiment of this application are equivalent to each other, and any layer-3 gateway device may have functions of other layer-3 gateway devices.

For example, the foregoing describes how the host routing information of the first host is obtained by using an example in which the third host managed by the first layer-3 gateway device initiates an address request packet. However, in this application, a host managed by another layer-3 gateway device may send an address request packet to cause the second layer-3 gateway device to obtain the host routing information of the first host, and then the second layer-3 gateway device broadcasts the host routing information, so that the host routing information reaches the first layer-3 gateway device and the another layer-3 gateway device.

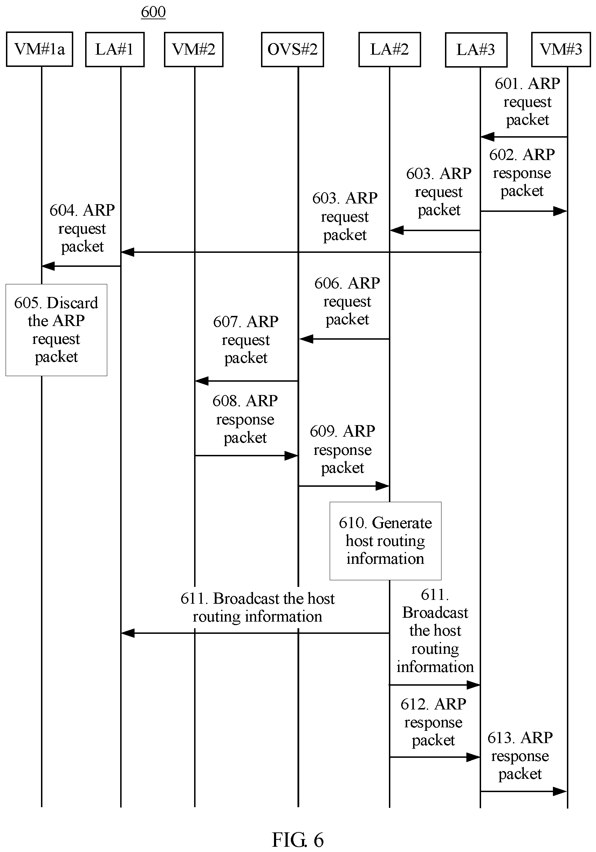

For ease of understanding, the following describes Implementation 1 in detail with reference to FIG. 6.

In FIG. 6, it is assumed that the LA#3 acts as a layer-2 gateway device and a layer-3 gateway device for the VM#3, the LA#2 acts as a layer-3 gateway device for the VM#2, the OVS#2 acts as a layer-2 gateway device for the VM#2, and the LA#1 acts as a layer-2 gateway device and a layer-3 gateway device for a VM managed by the LA#1.

Step 601: The VM#3 sends an ARP request packet, where in the ARP request packet, a source IP address is an IP address of the VM#3, a source MAC address is a MAC address of the VM#3, and a destination IP address is an IP address of the VM#2.

Step 602: After receiving the ARP request packet, the LA#3 determines that the LA#3 stores host routing information corresponding to the destination IP address, and may act as an ARP proxy. Specifically, the LA#3 may obtain a MAC address from the host routing information, and generate an ARP response packet. In the ARP response packet, a source IP address is the IP address of the VM#2, a source MAC address is the IP address of the VM#2, a destination IP address is the IP address of the VM#3, and a destination MAC address is the MAC address of the VM#3.

Step 603: After receiving the ARP request packet, the LA#3 finds that the LA#3 does not store host routing information corresponding to the destination IP address.

Specifically, if the LA#3 deploys user-side ARP SNOOPING and ARP proxy, the LA#3 captures the ARP request packet to a control-plane ARP protocol, and the control-plane ARP protocol finds, according to the destination IP address, that the host routing information corresponding to the destination IP address does not exist.

The LA#3 performs VXLAN encapsulation on the ARP request packet, and broadcasts the packet. The LA#3 may perform VXLAN encapsulation by means of head-end replication, or perform VXLAN encapsulation in a multicast manner.

Head-end replication means replicating the ARP request packet to obtain a plurality of replications, each replication carries one VTEP identifier, and different replications carry different VTEP identifiers. For example, VTEP identifiers of the LA#2 and the LA#1 that act as layer-3 gateway devices and that are connected to the LA#3 need to be carried. If the LA#3 is further connected to a layer-2 gateway device, a VTEP identifier of the layer-2 gateway device may further need to be carried.

Multicast means encapsulating a destination VTEP identifier in the ARP request packet as a multicast VTEP identifier.

In this embodiment of this application, the multicast VTEP identifier may be corresponding to a multicast group. When members in the multicast group communicate with each other, the destination VTEP identifier may carry the multicast VTEP identifier. After receiving a packet carrying the multicast VTEP identifier, a member in the multicast group determines that the packet carries the multicast VTEP identifier, and may perform VXLAN decapsulation and corresponding subsequent processing on the packet. The multicast group corresponding to the multicast VTEP identifier in the method 600 may include the LA#1, the LA#2, and the LA#3.

Step 604: After receiving the ARP request packet sent by the LA#3, the LA#1 may perform VXLAN decapsulation, and send the packet to a VM managed by the LA#1, for example, the VM#la.

Step 605: After receiving the ARP request packet, if the VM#la finds that the destination IP address in the ARP request packet is not an IP address of the VM#la, the VM#la discards the ARP request packet.

Step 606: After receiving the ARP request packet sent by the LA#3, the LA#2 may perform VXLAN encapsulation on the ARP request packet; perform VXLAN encapsulation again, where a source VTEP identifier is a VTEP identifier of the LA#2, and a destination VTEP identifier is a VTEP identifier of the OVS#2; and send the VXLAN-encapsulated packet. Certainly, if the LA#2 is further connected to another OVS, the LA#2 further needs to encapsulate a VTEP identifier of the another OVS into the ARP request packet, and sends the packet.

Step 607: After receiving the ARP request packet, the OVS#2 decapsulates the ARP request packet, and sends the packet to a VM managed by the OVS#2.

Step 608: After receiving the ARP request packet, if the VM#2 finds that the destination IP address is the IP address of the VM#2, the VM#2 generates and sends an ARP response packet, where in the ARP response packet, a source IP address is the IP address of the VM#2, a source MAC address is a MAC address of the VM#2, a destination IP address is the IP address of the VM#3, and a destination MAC address is the MAC address of the VM#3.

Step 609: After receiving the ARP response packet, the OVS#2 performs VXLAN encapsulation by using the OVS#2 as a source VTEP identifier in the ARP response packet and using the VTEP of the LA#2 as a destination VTEP identifier in the ARP response packet; and sends the packet to the LA#2.

Step 610: The LA#2 receives the ARP response packet, where in the ARP response packet, the source IP address is the IP address of the VM#2, the source MAC address is the MAC address of the VM#2, the source VTEP identifier is the VTEP identifier of the OVS#2, the destination IP address is a real IP address of the VM#3, the destination MAC address is a real MAC address of the VM#3, and the destination VTEP identifier is a VTEP identifier of the VM#3; and the LA#2 may obtain the IP address and the MAC address of the VM#2 based on the ARP response packet; obtain, based on the ARP response packet, a VTEP identifier of a next hop that is of a host routing information receiving party and that exists when the host routing information receiving party sends information to the VM#2; and generate the host routing information based on the MAC address and the IP address of the VM#2 and the VTEP identifier of the next hop. The VTEP identifier of the next hop may be the VTEP identifier of the LA#2 or the VTEP identifier of the OVS#2.

Step 611: The LA#2 broadcasts the host routing information, and after receiving the host routing information, the LA#1 and the LA#3 may store the host routing information.

Step 612: The LA#2 sends the ARP response packet to the LA#3.

Step 613: The LA#3 receives the ARP response packet, performs VXLAN decapsulation, and sends the packet to the VM#3. In the ARP response packet received by the LA#3, the source IP address is the IP address of the VM#2, the source MAC address is the MAC address of the VM#2, the source VTEP identifier is the VTEP identifier of the OVS#2, the destination IP address is the IP address of the VM#3, the destination MAC address is the MAC address of the VM#3, and the destination VTEP identifier is the VTEP identifier of the VM#3. After receiving the ARP response packet, the LA#3 may obtain the IP address and the MAC address of the VM#2 from the response packet; obtain, from the response packet, the VTEP identifier of the next hop that is of the host routing information receiving party and that exists when the host routing information receiving party sends information to the VM#2, that is, the VTEP identifier of the LA#2; and generate the host routing information based on the MAC address and the IP address of the VM#2 and the VTEP identifier of the next hop. The LA#3 may set priorities for the host routing information obtained from the ARP response packet and the received host routing information broadcast by the LA#2, and forward a traffic packet destined for the VM#2 or act as an ARP proxy for the VM#2, by using host routing information with a higher priority.

### Implementation 3

The second layer-3 gateway device obtains host routing information of the first host based on an ARP entry of the first host stored in the second layer-3 gateway device or based on an ARP entry and a MAC entry of the first host, and advertises the host routing information by means of broadcast. Specifically, the second layer-3 gateway device may broadcast, based on a command of a controller, the host routing information learned based on the ARP entry of the first host stored in the second layer-3 gateway device or based on the ARP entry and the MAC entry of the first host. For example, the controller may trigger the command based on human control, or may trigger the command when it is determined that a quantity of layer-3 gateway devices storing the ARP entry of the first host is less than a given quantity value. For another example, when a trigger condition specified by the second layer-3 gateway device is met, the second layer-3 gateway device obtains and broadcasts the host routing information of the first host.

The ARP entry and the MAC entry of the first host may be delivered by the controller, or may be generated by the second layer-3 gateway device based on an ARP response packet with which the first host replies after the second layer-3 gateway device sends an ARP request packet.

It is assumed that the second layer-3 gateway device manages the first host. The second layer-3 gateway device may obtain an IP address and a MAC address of the first host based on the ARP entry, and may obtain, based on the MAC entry of the first host, a VTEP identifier of a next hop that is of a host routing information receiving party and that exists when the host routing information receiving party sends information to the first host, where the next hop may be a layer-2 gateway device between the second layer-3 gateway device and the first host, so as to generate the host routing information of the first host. Alternatively, it is assumed that the second layer-3 gateway device manages the first host. The second layer-3 gateway device may obtain an IP address and a MAC address of the first host based on the ARP entry, and use a VTEP identifier of the second layer-3 gateway device as a VTEP identifier of a next hop that is of a host routing information receiving party and that exists when the host routing information receiving party sends information to the first host, so as to generate the host routing information of the first host.

In this embodiment of this application, the first host may not be managed by the second layer-3 gateway device. In this case, the second layer-3 gateway device may store the ARP entry and the MAC entry of the first host.

The second layer-3 gateway device may obtain an IP address and a MAC address of the first host based on the ARP entry, and determine a VTEP identifier of the second layer-3 gateway device as a VTEP identifier of a next hop that is of a host routing information receiving party and that exists when the host routing information receiving party sends information to the first host, so as to generate the routing information of the first host.

Alternatively, the second layer-3 gateway device may obtain an IP address and a MAC address of the first host based on the ARP entry, and determine a VTEP identifier indicated by the MAC entry as a VTEP identifier of a next hop that is of a host routing information receiving party and that exists when the host routing information receiving party sends information to the first host, so as to generate the routing information of the first host. The next hop may be a layer-3 gateway device managing the first host.

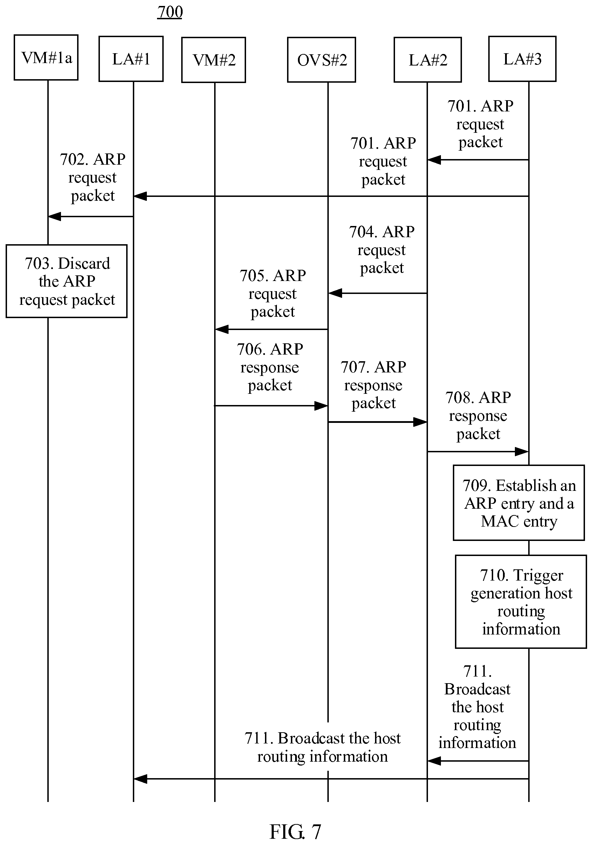

For ease of understanding, the following describes Implementation 3 in detail with reference to FIG. 7.

Step 701: If the LA#3 needs to obtain an ARP entry related to an IP address, assuming that the IP address is an IP address of the VM#2, the LA#3 may generate an ARP request packet, where the ARP request carries a real IP address and a real MAC address of the LA#3. The LA#3 performs VXLAN encapsulation on the ARP request packet, and broadcasts the packet. The LA#3 may perform VXLAN encapsulation by means of head-end replication, or perform VXLAN encapsulation in a multicast manner.

Head-end replication means replicating the ARP request packet to obtain a plurality of replications, each replication carries one VTEP identifier, and different replications carry different VTEP identifiers. For example, VTEP identifiers of the LA#2 and the LA#1 that act as layer-3 gateway devices and that are connected to the LA#3 need to be carried. If the LA#3 is further connected to a layer-2 gateway device, a VTEP identifier of the layer-2 gateway device may further need to be carried.

Multicast means encapsulating a destination VTEP identifier in the ARP request packet as a multicast VTEP identifier.

In this embodiment of this application, the multicast VTEP identifier may be corresponding to a multicast group. When members in the multicast group communicate with each other, the destination VTEP identifier may carry the multicast VTEP identifier. After receiving a packet carrying the multicast VTEP identifier, a member in the multicast group determines that the packet carries the multicast VTEP identifier, and may perform VXLAN decapsulation and corresponding subsequent processing on the packet. The multicast group corresponding to the multicast VTEP identifier in the method 500 may include the LA#1, the LA#2, and the LA#3.

Step 702: After receiving the ARP request packet sent by the LA#3, the LA#1 may perform VXLAN decapsulation, and send the packet to a VM managed by the LA#1, for example, the VM#la.

Step 703: After receiving the ARP request packet, if the VM#la finds that a destination IP address in the ARP request packet is not an IP address of the VM#la, the VM#la discards the ARP request packet.

Step 704: After receiving the ARP request packet sent by the LA#3, the LA#2 may perform VXLAN decapsulation on the ARP request packet; perform VXLAN encapsulation again, where a source VTEP identifier is a VTEP identifier of the LA#2, and a destination VTEP identifier is a VTEP identifier of the OVS#2; and send the VXLAN-encapsulated packet.

Step 705: After receiving the ARP request packet, the OVS#2 decapsulates the ARP request packet, and sends the packet to a VM managed by the OVS#2.

Step 706: After receiving the ARP request packet, if the VM#2 finds that the destination IP address is the IP address of the VM#2, the VM#2 generates and sends an ARP response packet, where in the ARP response packet, a source IP address is the IP address of the VM#2, a source MAC address is a MAC address of the VM#2, a destination IP address is the real IP address of the LA#3, and a destination MAC address is the real MAC address of the LA#3.

Step 707: After receiving the ARP response packet, the OVS#2 performs VXLAN encapsulation by using the OVS#2 as a source VTEP identifier in the ARP response packet and using the VTEP of the LA#2 as a destination VTEP identifier in the ARP response packet; and sends the packet to the LA#2.

Step 708: The LA#2 receives the ARP response packet, and sends the ARP response packet to the LA#3, where in the ARP response packet, the source IP address is the IP address of the VM#2, the source MAC address is the MAC address of the VM#2, the source VTEP identifier is the VTEP identifier of the OVS#2, the destination IP address is the real IP address of the LA#3, the destination MAC address is the real MAC address of the LA#3, and the destination VTEP identifier is a VTEP identifier of the LA#3.

Step 709: After receiving the ARP response packet, the LA#3 may obtain the IP address and the MAC address of the VM#2 from the response packet, to establish the ARP entry, where in the ARP entry, a source IP address is the real IP address of the LA#3, a source MAC address is the real MAC address of the LA#3, a destination IP address is an IP address of the VM#3, and a destination MAC address is a MAC address of the VM#3; and obtain, from the response packet, a VTEP identifier of a next hop that is of a host routing information receiving party and that exists when the host routing information receiving party sends information to the VM#2, that is, the VTEP identifier of the LA#2, to establish a MAC entry, where the MAC entry is used to indicate that the VTEP identifier of the next hop corresponding to the VM#2 is the VTEP identifier of the LA#2.

Step 710: After determining that host routing information of the VM#2 needs to be broadcast, a controller may trigger the LA#3 to broadcast the host routing information, and the LA#3 may obtain the IP address and the MAC address of the VM#2 from the ARP entry, and obtain, from the MAC entry, the VTEP identifier of the next hop that is of the host routing information receiving party and that exists when the host routing information receiving party sends information to the VM#2, that is, the VTEP identifier of the LA#2, so as to generate the host routing information of the VM#2 based on the IP address and the MAC address of the VM#2 and the VTEP identifier of the LA#2; or the LA#3 may obtain the IP address and the MAC address of the VM#2 from the ARP entry, and use the VTEP identifier of the LA#3 as the VTEP identifier of the next hop that is of the host routing information receiving party and that exists when the host routing information receiving party sends information to the VM#2, that is, the VTEP identifier of the LA#3, so as to generate the host routing information of the VM#2 based on the IP address and the MAC address of the VM#2 and the VTEP identifier of the LA#3.

Step 711: The LA#3 broadcasts the host routing information to another LA (such as the LA#1 or the LA#2).

Therefore, in this embodiment of this application, host routing information of a host is advertised between at least two layer-3 gateway devices. The host routing information includes an IP address of the host, a MAC address of the host, and a VTEP identifier of a next hop. A layer-3 gateway device receiving the host routing information forwards a packet destined for the host and acts as an ARP proxy for the host, based on the host routing information. Therefore, a quantity of packets that are used for obtaining a forwarding entry and that are broadcast between the at least two layer-3 gateway devices can be reduced, and backhaul traffic can be reduced. In addition, the following problem can be avoided: The forwarding entry cannot be updated in a timely manner because the controller delivers a static forwarding entry to the layer-3 gateway devices and the host; and a traffic convergence and forwarding bottleneck with a centralized VXLAN layer-3 gateway device can be avoided.

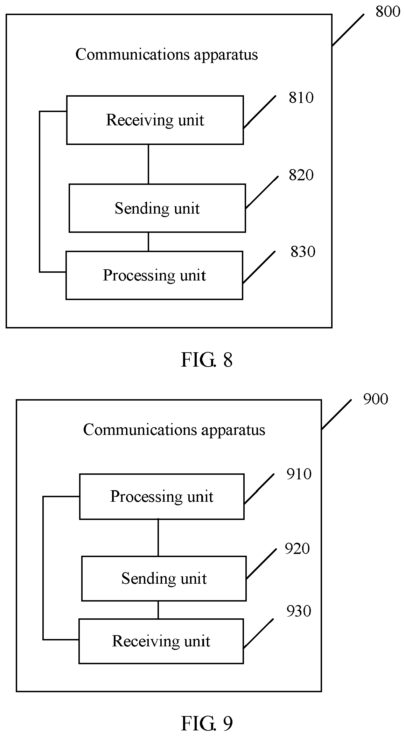

FIG. 8 is a schematic block diagram of a communications apparatus 800 for a Virtual Extensible Local Area Network VXLAN according to an embodiment of this application. A data center of the VXLAN includes a first layer-3 gateway device and a second layer-3 gateway device. The communications apparatus is the first layer-3 gateway device, and the apparatus 800 includes a receiving unit 810 and a processing unit 830.

The receiving unit 810 is configured to receive host routing information sent by the second layer-3 gateway device. The host routing information includes an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host.

The processing unit 830 is configured to: forward a traffic packet destined for the first host, based on the host routing information, and act as an Address Resolution Protocol ARP proxy for the first host, based on the host routing information.

Optionally, as shown in FIG. 8, the apparatus 800 further includes a sending unit 830.

Optionally, the first layer-3 gateway device manages a second host.

The receiving unit 810 is further configured to receive a first address request packet sent by the second host. In the first address request packet, a source IP address is an IP address of the second host, a source MAC address is a MAC address of the second host, and a destination IP address is the IP address of the first host.

The processing unit 830 is configured to: determine that the destination IP address in the first address request packet matches the IP address of the first host in the host routing information; obtain the MAC address of the first host based on the host routing information; and instruct the sending unit 830 to send a first address response packet. In the first address response packet, a source IP address is the IP address of the first host, a source MAC address is the MAC address of the first host, a destination IP address is the IP address of the second host, and a destination MAC address is the MAC address of the second host.

The sending unit 820 is configured to send the first address response packet to the second host.

Optionally, the first layer-3 gateway device manages a second host.

The receiving unit 810 is further configured to receive a traffic packet sent by the second host. In the traffic packet, a source IP address is an IP address of the second host, a source MAC address is a MAC address of the second host, a destination IP address is the IP address of the first host, and a destination MAC address is the MAC address of the first host.

The processing unit 830 is further configured to: determine that the destination IP address in the traffic packet matches the IP address of the first host in the host routing information; obtain the VTEP identifier of the next hop based on the host routing information; encapsulate the VTEP identifier of the next hop into the traffic packet; and instruct the sending unit 830 to send the encapsulated traffic packet to the next hop.

The sending unit 820 is further configured to send the encapsulated traffic packet to the next hop.

Optionally, the receiving unit 810 is specifically configured to:
receive the host routing information broadcast by the second layer-3 gateway device.

Optionally, the sending unit 820 is further configured to broadcast a second address request packet. In the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host.

The receiving unit 810 is further configured to: receive a second address response packet, where in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or
receive the host routing information that is generated by the second layer-3 gateway device based on the second address response packet and that is broadcast by the second layer-3 gateway device.

Optionally, after the receiving unit 810 receives the second address response packet and the broadcast host routing information, the processing unit 830 is further configured to:
select, based on a priority order of the host routing information included in the second address response packet and the host routing information broadcast by the second layer-3 gateway device, host routing information used for forwarding a traffic packet destined for the first host or acting as an ARP proxy for the first host.

Optionally, the first layer-3 gateway device manages a third host.

The receiving unit 810 is further configured to receive a third address request packet. In the third address request packet, a source IP address is an IP address of the third host, a source MAC address is a MAC address of the third host, and a destination IP address is the IP address of the first host.

The processing unit 830 is further configured to determine that the first layer-3 gateway device does not store the host routing information corresponding to the IP address of the first host.

The sending unit 820 is further configured to broadcast the third address request packet.

The receiving unit 810 is further configured to: receive a third address response packet, where the third address response packet includes the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or
receive the host routing information that is generated by the second layer-3 gateway device based on the third address response packet and that is broadcast by the second layer-3 gateway device.

Optionally, after the receiving unit receives the third address response packet and the broadcast host routing information, based on the host routing information, the processing unit 830 is further configured to:
select, based on a priority order of the host routing information included in the third address response packet and the host routing information broadcast by the second layer-3 gateway device, host routing information used for forwarding a traffic packet destined for the first host or acting as an ARP proxy for the first host.

Optionally, the data center further includes a layer-2 gateway device that is connected between the second layer-3 gateway device and a host managed by the second layer-3 gateway device.

The second layer-3 gateway device manages the first host, the VTEP identifier of the next hop is a VTEP identifier of the layer-2 gateway device, and the second layer-3 gateway device acts as a route reflector between the first layer-3 gateway device and the layer-2 gateway device; or
the VTEP identifier of the next hop is a VTEP identifier of the second layer-3 gateway device.

Optionally, the second layer-3 gateway device manages the first host, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

It should be understood that the apparatus 800 may be corresponding to the first layer-3 gateway device in the method embodiments, and may implement corresponding functions of the first layer-3 gateway device. For brevity, details are not described herein again.

FIG. 9 is a schematic block diagram of a communications apparatus 900 for a Virtual Extensible Local Area Network VXLAN according to an embodiment of this application. A data center of the VXLAN includes a second layer-3 gateway device, the communications apparatus 900 is the second layer-3 gateway device, and the apparatus 900 includes a processing unit 910 and a sending unit 920.

The processing unit 910 is configured to generate host routing information. The host routing information includes an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host.

The sending unit 920 is configured to send the host routing information to another layer-3 gateway device in the data center.

Optionally, the another layer-3 gateway device includes a first layer-3 gateway device, the communications apparatus further includes a receiving unit 930, and the second layer-3 gateway device manages the first host.

The receiving unit 930 is configured to receive a second address request packet broadcast by the first layer-3 gateway device. In the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device.

The sending unit 920 is further configured to broadcast the second address request packet to a host managed by the second layer-3 gateway device.

The receiving unit 930 is further configured to receive a second address response packet. In the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host.

The processing unit 910 is further configured to: obtain the IP address of the first host from the source IP address in the received second address response packet, and obtain the MAC address of the first host from the source MAC address in the received second address response packet; and
use a VTEP identifier of the second layer-3 gateway device as the VTEP identifier of the next hop, or when the second address response packet includes a source VTEP identifier and a destination VTEP identifier, obtain the VTEP identifier of the next hop from the source VTEP identifier in the received second address response packet, where the source VTEP identifier is a VTEP identifier of a layer-2 gateway device between the second layer-3 gateway device and the first host, and the destination VTEP identifier is a VTEP identifier of the second layer-3 gateway device.

Optionally, the sending unit 920 is further configured to send the second address response packet to the first layer-3 gateway device.

Optionally, the another layer-3 gateway device includes a first layer-3 gateway device, the first layer-3 gateway device manages a third host, and the second layer-3 gateway device manages the first host.

The receiving unit 930 is further configured to receive a third address request packet that is from the third host and that is broadcast by the first layer-3 gateway device. In the third address request packet, a source IP address is an IP address of the third host, a source MAC address is a MAC address of the third host, and a destination IP address is the IP address of the first host.

The sending unit 920 is further configured to broadcast the third address request packet to a host managed by the second layer-3 gateway device.

The receiving unit 930 is further configured to receive a third address response packet. In the third address response packet, a destination IP address is the IP address of the third host, a destination MAC address is the MAC address of the third host, a source IP address is the IP address of the first host, and a source MAC address is the MAC address of the first host.

The processing unit 910 is further configured to: obtain the IP address of the first host from the source IP address in the third address response packet, and obtain the MAC address of the first host from the source MAC address in the third address response packet; and

use a VTEP identifier of the second layer-3 gateway device as the VTEP identifier of the next hop, or when the second address response packet includes a source VTEP identifier and a destination VTEP identifier, obtain the VTEP identifier of the next hop from the source VTEP identifier in the received third address response packet, where the source VTEP identifier is a layer-2 gateway device between the second layer-3 gateway device and the first host, and the destination VTEP identifier is a VTEP identifier of the second layer-3 gateway device.

The sending unit 920 is further configured to send the third address response packet to the first layer-3 gateway device.

Optionally, before the processing unit 910 generates the host routing information, the processing unit 910 is further configured to:
obtain the IP address of the first host and the MAC address of the first host based on an ARP entry of the first host; and
determine a VTEP identifier of the second layer-3 gateway device as the VTEP identifier of the next hop, or when a MAC entry of the first host exists, determine a VTEP identifier indicated by the MAC entry as the VTEP identifier of the next hop.

Optionally, the sending unit 920 is further configured to:
send the host routing information by using a neighbor relationship established between the second layer-3 gateway device and the another layer-3 gateway device; or
send the host routing information to a route reflector by using a neighbor relationship established between the second layer-3 gateway device and the route reflector, so that the route reflector sends the host routing information to the another layer-3 gateway device.

Optionally, the data center further includes a layer-2 gateway device that is connected between the second layer-3 gateway device and a host managed by the second layer-3 gateway device.

The second layer-3 gateway device manages the first host, the VTEP identifier of the next hop is a VTEP identifier of the layer-2 gateway device, and the second layer-3 gateway device acts as a route reflector between the first layer-3 gateway device and the layer-2 gateway device; or the VTEP identifier of the next hop is a VTEP identifier of the second layer-3 gateway device.

Optionally, the second layer-3 gateway device manages the first host, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

It should be understood that the apparatus 900 may be corresponding to the second layer-3 gateway device in the method embodiments, and may implement corresponding functions of the second layer-3 gateway device. For brevity, details are not described herein again.

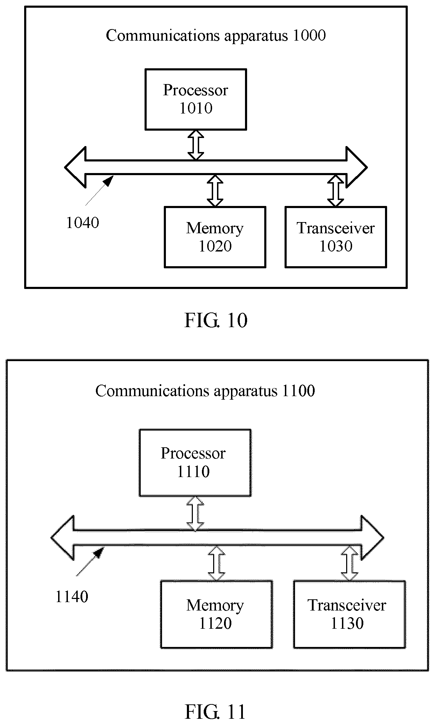

FIG. 10 is a schematic block diagram of a communications apparatus 1000 for a VXLAN according to an embodiment of this application. A data center of the VXLAN includes a first layer-3 gateway device and a second layer-3 gateway device. The apparatus 1000 is the first layer-3 gateway device.

As shown in FIG. 10, the apparatus 1000 includes a processor 1010, a memory 1020, and a transceiver 1030. The memory 1020 is configured to store a program instruction. The processor 1010 may call the program instruction stored in the memory 1020, and may perform one or more steps of the first layer-3 gateway device in the method embodiments. The transceiver 1030 is configured for the apparatus to communicate with the outside. The apparatus may act as the first layer-3 gateway device, may be corresponding to the first layer-3 gateway device in the method embodiments, and implement corresponding functions of the first layer-3 gateway device. Optionally, the apparatus 1000 may further include a bus system 1040. The processor 1010, the memory 1020, and the transceiver 1030 are connected by using the bus system 1040.

Specifically, the processor 1010 calls the program instruction stored in the memory 1020, to perform the following operations:
receiving, by using the transceiver 1030, host routing information sent by the second layer-3 gateway device, where the host routing information includes an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host; and
forwarding a traffic packet destined for the first host or acting as an Address Resolution Protocol ARP proxy for the first host, by using the transceiver 1030 based on the host routing information.

Optionally, the first layer-3 gateway device manages a second host, and the processor 1010 calls the program instruction stored in the memory 1020, to perform the following operations:
receiving, by using the transceiver 1030, a first address request packet sent by the second host, where in the first address request packet, a source IP address is an IP address of the second host, a source MAC address is a MAC address of the second host, and a destination IP address is the IP address of the first host;
determining that the destination IP address in the first address request packet matches the IP address of the first host in the host routing information;
obtaining the MAC address of the first host based on the host routing information; and
sending a first address response packet to the second host by using the transceiver 1030, where in the first address response packet, a source IP address is the IP address of the first host, a source MAC address is the MAC address of the first host, a destination IP address is the IP address of the second host, and a destination MAC address is the MAC address of the second host.

Optionally, the processor 1010 calls the program instruction stored in the memory 1020, to perform the following operations:
receiving, by using the transceiver 1030, a traffic packet sent by the second host, where in the traffic packet, a source IP address is an IP address of the second host, a source MAC address is a MAC address of the second host, a destination IP address is the IP address of the first host, and a destination MAC address is the MAC address of the first host;
determining that the destination IP address in the traffic packet matches the IP address of the first host in the host routing information;
obtaining the VTEP identifier of the next hop based on the host routing information;
encapsulating the VTEP identifier of the next hop into the traffic packet; and
sending the encapsulated traffic packet to the next hop by using the transceiver 1030.

Optionally, the processor 1010 calls the program instruction stored in the memory 1020, to perform the following operation:
receiving, by using the transceiver 1030, the host routing information broadcast by the second layer-3 gateway device.

Optionally, the second layer-3 gateway device manages the first host, and the processor 1010 calls the program instruction stored in the memory 1020, to perform the following operations:
broadcasting a second address request packet by using the transceiver 1030, where in the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host; and
receiving a second address response packet by using the transceiver 1030, where in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or
receiving, by using the transceiver 1030, the host routing information that is generated by the second layer-3 gateway device based on the second address response packet and that is broadcast by the second layer-3 gateway device.

Optionally, the processor 1010 calls the program instruction stored in the memory 1020, to perform the following operation:
selecting, based on a priority order of the host routing information included in the second address response packet and the host routing information broadcast by the second layer-3 gateway device, host routing information used for forwarding a traffic packet destined for the first host or acting as an ARP proxy for the first host.

Optionally, the second layer-3 gateway device manages the first host, the first layer-3 gateway device manages a third host, and the processor 1010 calls the program instruction stored in the memory 1020, to perform the following operations:
receiving a third address request packet by using the transceiver 1030, where in the third address request packet, a source IP address is an IP address of the third host, a source MAC address is a MAC address of the third host, and a destination IP address is the IP address of the first host;
determining that the first layer-3 gateway device does not store the host routing information corresponding to the IP address of the first host; and
broadcasting the third address request packet by using the transceiver 1030; and
receiving a third address response packet by using the transceiver 1030, where the third address response packet includes the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or
receiving, by using the transceiver 1030, the host routing information that is generated by the second layer-3 gateway device based on the third address response packet and that is broadcast by the second layer-3 gateway device.

Optionally, the processor 1010 calls the program instruction stored in the memory 1020, to perform the following operation:
selecting, based on a priority order of the host routing information included in the third address response packet and the host routing information broadcast by the second layer-3 gateway device, host routing information used for forwarding a traffic packet destined for the first host or acting as an ARP proxy for the first host.

Optionally, the data center further includes a layer-2 gateway device that is connected between the second layer-3 gateway device and a host managed by the second layer-3 gateway device.

The second layer-3 gateway device manages the first host, the VTEP identifier of the next hop is a VTEP identifier of the layer-2 gateway device, and the second layer-3 gateway device acts as a route reflector between the first layer-3 gateway device and the layer-2 gateway device; or
the VTEP identifier of the next hop is a VTEP identifier of the second layer-3 gateway device.

Optionally, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

FIG. 11 is a schematic block diagram of a communications apparatus 1100 for a VXLAN according to an embodiment of this application. A data center of the VXLAN includes a second layer-3 gateway device. The apparatus 1100 is the second layer-3 gateway device.

As shown in FIG. 11, the apparatus 1100 includes a processor 1110, a memory 1120, and a transceiver 1130. The memory 1120 is configured to store a program instruction. The processor 1110 may call the program instruction stored in the memory 1120, and may perform one or more steps of the first layer-3 gateway device in the method embodiments. The transceiver 1130 is configured for the apparatus to communicate with the outside. The apparatus may act as the first layer-3 gateway device, may be corresponding to the second layer-3 gateway device in the method embodiments, and implement corresponding functions of the second layer-3 gateway device. Optionally, the apparatus 1100 may further include a bus system 1140. The processor 1110, the memory 1120, and the transceiver 1130 are connected by using the bus system 1140.

The processor 1110 calls the program instruction stored in the memory 1120, to perform the following operations:
generating host routing information, where the host routing information includes an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host; and
sending the host routing information to another layer-3 gateway device in the data center by using the transceiver 1130.

Optionally, the second layer-3 gateway device manages the first host, the another layer-3 gateway device includes a first layer-3 gateway device, and the processor 1110 calls the program instruction stored in the memory 1120, to perform the following operations:
receiving, by using the transceiver 1130, a second address request packet broadcast by the first layer-3 gateway device, where in the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device;
broadcasting, by using the transceiver 1130, the second address request packet to a host managed by the second layer-3 gateway device;
receiving a second address response packet by using the transceiver 1130, where in the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host;
obtaining, by using the transceiver 1130, the IP address of the first host from the source IP address in the received second address response packet, and obtaining the MAC address of the first host from the source MAC address in the received second address response packet;
using a VTEP identifier of the second layer-3 gateway device as the VTEP identifier of the next hop, or when the second address response packet includes a source VTEP identifier and a destination VTEP identifier, obtaining the VTEP identifier of the next hop from the source VTEP identifier in the received second address response packet, where the source VTEP identifier is a VTEP identifier of a layer-2 gateway device between the second layer-3 gateway device and the first host, and the destination VTEP identifier is a VTEP identifier of the second layer-3 gateway device; and
sending the second address response packet to the first layer-3 gateway device by using the transceiver 1130.

Optionally, the second layer-3 gateway device manages the first host, the another layer-3 gateway device includes a first layer-3 gateway device, the first layer-3 gateway device manages a third host, and the processor 1110 calls the program instruction stored in the memory 1120, to perform the following operations:
receiving, by using the transceiver 1130, a third address request packet that is from the third host and that is broadcast by the first layer-3 gateway device, where in the third address request packet, a source IP address is an IP address of the third host, a source MAC address is a MAC address of the third host, and a destination IP address is the IP address of the first host;
broadcasting, by using the transceiver 1130, the third address request packet to a host managed by the second layer-3 gateway device;
receiving a third address response packet by using the transceiver 1130, where in the third address response packet, a destination IP address is the IP address of the third host, a destination MAC address is the MAC address of the third host, a source IP address is the IP address of the first host, and a source MAC address is the MAC address of the first host;
obtaining the IP address of the first host from the source IP address in the third address response packet, and obtaining the MAC address of the first host from the source MAC address in the third address response packet;
using a VTEP identifier of the second layer-3 gateway device as the VTEP identifier of the next hop, or when the second address response packet includes a source VTEP identifier and a destination VTEP identifier, obtaining the VTEP identifier of the next hop from the source VTEP identifier in the received third address response packet, where the source VTEP identifier is a layer-2 gateway device between the second layer-3 gateway device and the first host, and the destination VTEP identifier is a VTEP identifier of the second layer-3 gateway device; and
sending the third address response packet to the first layer-3 gateway device by using the transceiver 1130.

Optionally, the processor 1110 calls the program instruction stored in the memory 1120, to perform the following operations:
obtaining the IP address of the first host and the MAC address of the first host based on an ARP entry of the first host; and
determining a VTEP identifier of the second layer-3 gateway device as the VTEP identifier of the next hop, or when a MAC entry of the first host exists, determining a VTEP identifier indicated by the MAC entry as the VTEP identifier of the next hop.

Optionally, the processor 1110 calls the program instruction stored in the memory 1120, to perform the following operation:
sending, by using the transceiver 1130, the host routing information by using a neighbor relationship established between the second layer-3 gateway device and the another layer-3 gateway device; or
sending, by using the transceiver 1130, the host routing information to a route reflector by using a neighbor relationship established between the second layer-3 gateway device and the route reflector, so that the route reflector sends the host routing information to the another layer-3 gateway device.

Optionally, the data center further includes a layer-2 gateway device that is connected between the second layer-3 gateway device and a host managed by the second layer-3 gateway device.

The second layer-3 gateway device manages the first host, the VTEP identifier of the next hop is a VTEP identifier of the layer-2 gateway device, and the second layer-3 gateway device acts as a route reflector between the first layer-3 gateway device and the layer-2 gateway device; or the VTEP identifier of the next hop is a VTEP identifier of the second layer-3 gateway device.

Optionally, the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

In the embodiments of this application, the processor 1010 and the processor 1110 may each be a central processing unit (central processing unit, CPU), a network processor (network processor, NP), or a combination of a CPU and an NP. The processor 1010 and the processor 1110 may each further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

In addition to a data bus, the bus system 1040 and the bus system 1140 may each include a power bus, a control bus, a status signal bus, and the like. For ease of denotation, the bus system 1040 and the bus system 1140 is each represented by only one thick line in the figure. However, this does not indicate that there is only one bus or only one type of bus.

A person of ordinary skill in the art may be aware that the units and algorithm steps in the examples described with reference to the embodiments disclosed in this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiments are only examples. For example, the unit division is only logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections via some interfaces, apparatuses, or units, and may be implemented in electronic, mechanical, or other forms.

The units described as separate parts may or may not be physically separate. Parts displayed as units may or may not be physical units, and may be located in one position or distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units may be integrated into one unit.

When the functions are implemented in the form of a software functional unit and sold or used as an independent product, the functions may be stored in a computer readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method for a Virtual Extensible Local Area Network VXLAN, wherein a data center of the VXLAN comprises a first layer-3 gateway device and a second layer-3 gateway device, and the method comprises:
receiving, by the first layer-3 gateway device, host routing information sent by the second layer-3 gateway device, wherein the host routing information comprises an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host; and
forwarding, by the first layer-3 gateway device, a traffic packet destined for the first host or acting, by the first layer-3 gateway device, as an Address Resolution Protocol ARP proxy for the first host, based on the host routing information.

2. The method according to claim 1, wherein the first layer-3 gateway device manages a second host, and the acting, by the first layer-3 gateway device, as an ARP proxy for the first host comprises:
receiving a first address request packet sent by the second host, wherein in the first address request packet, a source IP address is an IP address of the second host, a source MAC address is a MAC address of the second host, and a destination IP address is the IP address of the first host;
determining that the destination IP address in the first address request packet matches the IP address of the first host in the host routing information;
obtaining the MAC address of the first host based on the host routing information; and
sending a first address response packet to the second host, wherein in the first address response packet, a source IP address is the IP address of the first host, a source MAC address is the MAC address of the first host, a destination IP address is the IP address of the second host, and a destination MAC address is the MAC address of the second host.

3. The method according to claim 1 or 2, wherein the first layer-3 gateway device manages a second host, and the forwarding, by the first layer-3 gateway device, a traffic packet destined for the first host comprises:
receiving a traffic packet sent by the second host, wherein in the traffic packet, a source IP address is an IP address of the second host, a source MAC address is a MAC address of the second host, a destination IP address is the IP address of the first host, and a destination MAC address is the MAC address of the first host;
determining that the destination IP address in the traffic packet matches the IP address of the first host in the host routing information;
obtaining the VTEP identifier of the next hop based on the host routing information;
encapsulating the VTEP identifier of the next hop into the traffic packet; and
sending the encapsulated traffic packet to the next hop.

4. The method according to any one of claims 1 to 3, wherein the receiving, by the first layer-3 gateway device, host routing information sent by the second layer-3 gateway device comprises: receiving, by the first layer-3 gateway device, the host routing information broadcast by the second layer-3 gateway device.

5. The method according to any one of claims 1 to 3, wherein the second layer-3 gateway device manages the first host, and the method further comprises:
broadcasting, by the first layer-3 gateway device, a second address request packet, wherein in the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host; and
the receiving, by the first layer-3 gateway device, host routing information sent by the second layer-3 gateway device comprises:
receiving, by the first layer-3 gateway device, a second address response packet, wherein in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or
receiving, by the first layer-3 gateway device, the host routing information that is generated by the second layer-3 gateway device based on the second address response packet and that is broadcast by the second layer-3 gateway device.

6. The method according to claim 5, wherein after the first layer-3 gateway device receives the second address response packet and the broadcast host routing information, the forwarding, by the first layer-3 gateway device, a traffic packet destined for the first host or acting, by the first layer-3 gateway device, as an Address Resolution Protocol ARP proxy for the first host, based on the host routing information comprises:
selecting, based on a priority order of the host routing information comprised in the second address response packet and the host routing information broadcast by the second layer-3 gateway device, host routing information used for forwarding a traffic packet destined for the first host or acting as an ARP proxy for the first host.

7. The method according to any one of claims 1 to 3, wherein the second layer-3 gateway device manages the first host, the first layer-3 gateway device manages a third host, and the method further comprises:
receiving, by the first layer-3 gateway device, a third address request packet, wherein in the third address request packet, a source IP address is an IP address of the third host, a source MAC address is a MAC address of the third host, and a destination IP address is the IP address of the first host;
determining, by the first layer-3 gateway device, that the first layer-3 gateway device does not store the host routing information corresponding to the IP address of the first host; and
broadcasting, by the first layer-3 gateway device, the third address request packet; and
the receiving, by the first layer-3 gateway device, host routing information sent by the second layer-3 gateway device comprises:
receiving, by the first layer-3 gateway device, a third address response packet, wherein the third address response packet comprises the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or
receiving, by the first layer-3 gateway device, the host routing information that is generated by the second layer-3 gateway device based on the third address response packet and that is broadcast by the second layer-3 gateway device.

8. The method according to claim 7, wherein after the first layer-3 gateway device receives the third address response packet and the broadcast host routing information, the forwarding, by the first layer-3 gateway device, a traffic packet destined for the first host or acting, by the first layer-3 gateway device, as an Address Resolution Protocol ARP proxy for the first host, based on the host routing information comprises:
selecting, based on a priority order of the host routing information comprised in the third address response packet and the host routing information broadcast by the second layer-3 gateway device, host routing information used for forwarding a traffic packet destined for the first host or acting as an ARP proxy for the first host.

9. The method according to any one of claims 1 to 3, wherein the data center further comprises a layer-2 gateway device that is connected between the second layer-3 gateway device and a host managed by the second layer-3 gateway device; and
the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or
the VTEP identifier of the next hop is a VTEP identifier of the second layer-3 gateway device.

10. The method according to any one of claims 1 to 3, wherein the second layer-3 gateway device provides a function of a layer-2 gateway device, and the VTEP identifier of the next hop is a VTEP identifier of the second layer-3 gateway device.

11. A communication method for a Virtual Extensible Local Area Network VXLAN, wherein a data center of the VXLAN comprises a second layer-3 gateway device, and the method comprises:
generating, by the second layer-3 gateway device, host routing information, wherein the host routing information comprises an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host; and
sending, by the second layer-3 gateway device, the host routing information to another layer-3 gateway device in the data center.

12. The method according to claim 11, wherein the second layer-3 gateway device manages the first host, the another layer-3 gateway device comprises a first layer-3 gateway device, and before the generating, by the second layer-3 gateway device, host routing information, the method further comprises:
receiving, by the second layer-3 gateway device, a second address request packet broadcast by the first layer-3 gateway device, wherein in the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device;
broadcasting, by the second layer-3 gateway device, the second address request packet to a host managed by the second layer-3 gateway device;
receiving, by the second layer-3 gateway device, a second address response packet, wherein in the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host;
obtaining, by the second layer-3 gateway device, the IP address of the first host from the source IP address in the received second address response packet, and obtaining the MAC address of the first host from the source MAC address in the received second address response packet; and
using a VTEP identifier of the second layer-3 gateway device as the VTEP identifier of the next hop, or when the second address response packet comprises a source VTEP identifier and a destination VTEP identifier, obtaining the VTEP identifier of the next hop from the source VTEP identifier in the received second address response packet, wherein the source VTEP identifier is a VTEP identifier of a layer-2 gateway device between the second layer-3 gateway device and the first host, and the destination VTEP identifier is a VTEP identifier of the second layer-3 gateway device.

13. The method according to claim 11, wherein the second layer-3 gateway device manages the first host, the another layer-3 gateway device comprises a first layer-3 gateway device, the first layer-3 gateway device manages a third host, and before the generating, by the second layer-3 gateway device, host routing information, the method further comprises:
receiving, by the second layer-3 gateway device, a third address request packet that is from the third host and that is broadcast by the first layer-3 gateway device, wherein in the third address request packet, a source IP address is an IP address of the third host, a source MAC address is a MAC address of the third host, and a destination IP address is the IP address of the first host;
broadcasting, by the second layer-3 gateway device, the third address request packet to a host managed by the second layer-3 gateway device;
receiving, by the second layer-3 gateway device, a third address response packet, wherein in the third address response packet, a destination IP address is the IP address of the third host, a destination MAC address is the MAC address of the third host, a source IP address is the IP address of the first host, and a source MAC address is the MAC address of the first host;
obtaining, by the second layer-3 gateway device, the IP address of the first host from the source IP address in the third address response packet, and obtaining the MAC address of the first host from the source MAC address in the third address response packet; and
using a VTEP identifier of the second layer-3 gateway device as the VTEP identifier of the next hop, or when the third address response packet comprises a source VTEP identifier and a destination VTEP identifier, obtaining the VTEP identifier of the next hop from the source VTEP identifier in the received third address response packet, wherein the source VTEP identifier is a layer-2 gateway device between the second layer-3 gateway device and the first host, and the destination VTEP identifier is a VTEP identifier of the second layer-3 gateway device.

14. The method according to claim 11, wherein before the generating, by the second layer-3 gateway device, host routing information, the method further comprises:
obtaining, by the second layer-3 gateway device, the IP address of the first host and the MAC address of the first host based on an ARP entry of the first host; and
determining a VTEP identifier of the second layer-3 gateway device as the VTEP identifier of the next hop, or when a MAC entry of the first host exists, determining a VTEP identifier indicated by the MAC entry as the VTEP identifier of the next hop.

15. The method according to any one of claims 11 to 14, wherein the sending, by the second layer-3 gateway device, the host routing information comprises:
sending, by the second layer-3 gateway device, the host routing information by using a neighbor relationship established between the second layer-3 gateway device and the another layer-3 gateway device; or
sending, by the second layer-3 gateway device, the host routing information to a route reflector by using a neighbor relationship established between the second layer-3 gateway device and the route reflector, so that the route reflector sends the host routing information to the another layer-3 gateway device.

16. The method according to claim 10, wherein the data center further comprises a layer-2 gateway device that is connected between the second layer-3 gateway device and a host managed by the second layer-3 gateway device; and
the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or
the VTEP identifier of the next hop is a VTEP identifier of the second layer-3 gateway device.

17. The method according to claim 10, wherein the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

18. A communications apparatus for a Virtual Extensible Local Area Network VXLAN, wherein a data center of the VXLAN comprises a first layer-3 gateway device and a second layer-3 gateway device, the communications apparatus is the first layer-3 gateway device, and the apparatus comprises a receiving unit and a processing unit, wherein
the receiving unit is configured to receive host routing information sent by the second layer-3 gateway device, wherein the host routing information comprises an Internet Protocol IP address of the first host, a media access control MAC address of the first host, and a VXLAN tunnel end point VTEP identifier of a next hop that is of the first layer-3 gateway device and that exists when the first layer-3 gateway device sends information to the first host; and
the processing unit is configured to: forward a traffic packet destined for the first host, based on the host routing information, and act as an Address Resolution Protocol ARP proxy for the first host, based on the host routing information.

19. The apparatus according to claim 18, wherein the first layer-3 gateway device manages a second host, and the apparatus further comprises a sending unit, wherein
the receiving unit is further configured to receive a first address request packet sent by the second host, wherein in the first address request packet, a source IP address is an IP address of the second host, a source MAC address is a MAC address of the second host, and a destination IP address is the IP address of the first host;
the processing unit is configured to: determine that the destination IP address in the first address request packet matches the IP address of the first host in the host routing information; obtain the MAC address of the first host based on the host routing information; and instruct the sending unit to send a first address response packet, wherein in the first address response packet, a source IP address is the IP address of the first host, a source MAC address is the MAC address of the first host, a destination IP address is the IP address of the second host, and a destination MAC address is the MAC address of the second host; and
the sending unit is configured to send the first address response packet to the second host.

20. The apparatus according to claim 18 or 19, wherein the first layer-3 gateway device manages a second host, and the apparatus further comprises a sending unit, wherein
the receiving unit is further configured to receive a traffic packet sent by the second host, wherein in the traffic packet, a source IP address is an IP address of the second host, a source MAC address is a MAC address of the second host, a destination IP address is the IP address of the first host, and a destination MAC address is the MAC address of the first host;
the processing unit is further configured to: determine that the destination IP address in the traffic packet matches the IP address of the first host in the host routing information; obtain the VTEP identifier of the next hop based on the host routing information; encapsulate the VTEP identifier of the next hop into the traffic packet; and instruct the sending unit to send the encapsulated traffic packet to the next hop; and
the sending unit is further configured to send the encapsulated traffic packet to the next hop.

21. The apparatus according to any one of claims 18 to 20, wherein the receiving unit is specifically configured to:
receive the host routing information broadcast by the second layer-3 gateway device.

22. The apparatus according to any one of claims 18 to 20, wherein the second layer-3 gateway device manages the first host, and the apparatus further comprises the sending unit, wherein
the sending unit is further configured to broadcast a second address request packet, wherein in the second address request packet, a source IP address is an IP address exclusive to the first layer-3 gateway device, a source MAC address is a MAC address exclusive to the first layer-3 gateway device, a source VTEP identifier is a VTEP identifier exclusive to the first layer-3 gateway device, and a destination IP address is the IP address of the first host; and
the receiving unit is further configured to: receive a second address response packet, wherein in the second address response packet, a destination IP address is the IP address exclusive to the first layer-3 gateway device, a destination MAC address is the MAC address exclusive to the first layer-3 gateway device, a destination VTEP identifier is the VTEP identifier exclusive to the first layer-3 gateway device, a source IP address is the IP address of the first host, a source MAC address is the MAC address of the first host, and a source VTEP identifier is a VTEP identifier of the second layer-3 gateway device, and the host routing information is obtained by the first layer-3 gateway device from the source IP address, the source MAC address, and the source VTEP identifier; and/or
receive the host routing information that is generated by the second layer-3 gateway device based on the second address response packet and that is broadcast by the second layer-3 gateway device.

23. The apparatus according to claim 22, wherein after the receiving unit receives the second address response packet and the broadcast host routing information, the processing unit is further configured to:
select, based on a priority order of the host routing information comprised in the second address response packet and the host routing information broadcast by the second layer-3 gateway device, host routing information used for forwarding a traffic packet destined for the first host or acting as an ARP proxy for the first host.

24. The apparatus according to any one of claims 18 to 20, wherein the first layer-3 gateway device manages a third host, the second layer-3 gateway device manages the first host, and the apparatus further comprises the sending unit, wherein
the receiving unit is further configured to receive a third address request packet, wherein in the third address request packet, a source IP address is an IP address of the third host, a source MAC address is a MAC address of the third host, and a destination IP address is the IP address of the first host;
the processing unit is further configured to determine that the first layer-3 gateway device does not store the host routing information corresponding to the IP address of the first host;
the sending unit is further configured to broadcast the third address request packet; and
the receiving unit is further configured to: receive a third address response packet, wherein the third address response packet comprises the host routing information; in the third address response packet, a destination IP address is the IP address of the third host, a destination MAC address is the MAC address of the third host, a destination VTEP identifier is a VTEP identifier of the first layer-3 gateway device, a source IP address is the IP address of the first host, a source MAC address is the MAC address of the first host, and a source VTEP identifier is a VTEP identifier of the second layer-3 gateway device; and the host routing information is obtained by the first layer-3 gateway device from the source IP address, the source MAC address, and the source VTEP identifier; and/or
receive the host routing information that is generated by the second layer-3 gateway device based on the third address response packet and that is broadcast by the second layer-3 gateway device.

25. The apparatus according to claim 24, wherein after the receiving unit receives the third address response packet and the broadcast host routing information, based on the host routing information, the processing unit is further configured to:
select, based on a priority order of the host routing information comprised in the third address response packet and the host routing information broadcast by the second layer-3 gateway device, host routing information used for forwarding a traffic packet destined for the first host or acting as an ARP proxy for the first host.

26. The apparatus according to any one of claims 18 to 20, wherein the data center further comprises a layer-2 gateway device that is connected between the second layer-3 gateway device and a host managed by the second layer-3 gateway device; and
the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or
the VTEP identifier of the next hop is a VTEP identifier of the second layer-3 gateway device.

27. The apparatus according to any one of claims 18 to 20, wherein the first layer-3 gateway device provides a function of a layer-2 gateway device, the second layer-3 gateway device provides a function of a layer-2 gateway device, and the VTEP identifier of the next hop is a VTEP identifier of the second layer-3 gateway device.

28. A communications apparatus for a Virtual Extensible Local Area Network VXLAN, wherein a data center of the VXLAN comprises a second layer-3 gateway device, the communications apparatus is the second layer-3 gateway device, and the apparatus comprises a processing unit and a sending unit, wherein
the processing unit is configured to generate host routing information, wherein the host routing information comprises an IP address of the first host, a MAC address of the first host, and a VXLAN tunnel end point VTEP identifier of a next hop that is of a layer-3 gateway device receiving the host routing information and that exists when the layer-3 gateway device receiving the host routing information sends information to the first host; and
the sending unit is configured to send the host routing information to another layer-3 gateway device in the data center.

29. The apparatus according to claim 28, wherein the second layer-3 gateway device manages the first host, the another layer-3 gateway device comprises a first layer-3 gateway device, and the communications apparatus further comprises a receiving unit, wherein
the receiving unit is configured to receive a second address request packet broadcast by the first layer-3 gateway device, wherein in the second address request packet, a source IP address is an IP address exclusive to the first layer-3 gateway device, a source MAC address is a MAC address exclusive to the first layer-3 gateway device, and a source VTEP identifier is a VTEP identifier exclusive to the first layer-3 gateway device;
the sending unit is further configured to broadcast the second address request packet to a host managed by the second layer-3 gateway device;
the receiving unit is further configured to receive a second address response packet, wherein in the second address response packet, a destination IP address is the IP address exclusive to the first layer-3 gateway device, a destination MAC address is the MAC address exclusive to the first layer-3 gateway device, a source IP address is the IP address of the first host, and a source MAC address is the MAC address of the first host; and
the processing unit is further configured to: obtain the IP address of the first host from the source IP address in the received second address response packet, and obtain the MAC address of the first host from the source MAC address in the received second address response packet; and
use a VTEP identifier of the second layer-3 gateway device as the VTEP identifier of the next hop, or when the second address response packet comprises a source VTEP identifier and a destination VTEP identifier, obtain the VTEP identifier of the next hop from the source VTEP identifier in the received second address response packet, wherein the source VTEP identifier is a VTEP identifier of a layer-2 gateway device between the second layer-3 gateway device and the first host, and the destination VTEP identifier is a VTEP identifier of the second layer-3 gateway device.

30. The apparatus according to claim 28, wherein the second layer-3 gateway device manages the first host, the another layer-3 gateway device comprises a first layer-3 gateway device, and the first layer-3 gateway device manages a third host, wherein
the receiving unit is further configured to receive a third address request packet that is from the third host and that is broadcast by the first layer-3 gateway device, wherein in the third address request packet, a source IP address is an IP address of the third host, a source MAC address is a MAC address of the third host, and a destination IP address is the IP address of the first host;
the sending unit is further configured to broadcast the third address request packet to a host managed by the second layer-3 gateway device;
the receiving unit is further configured to receive a third address response packet, wherein in the third address response packet, a destination IP address is the IP address of the third host, a destination MAC address is the MAC address of the third host, a source IP address is the IP address of the first host, and a source MAC address is the MAC address of the first host; and
the processing unit is further configured to: obtain the IP address of the first host from the source IP address in the third address response packet, and obtain the MAC address of the first host from the source MAC address in the third address response packet; and
use a VTEP identifier of the second layer-3 gateway device as the VTEP identifier of the next hop, or when the second address response packet comprises a source VTEP identifier and a destination VTEP identifier, obtain the VTEP identifier of the next hop from the source VTEP identifier in the received third address response packet, wherein the source VTEP identifier is a layer-2 gateway device between the second layer-3 gateway device and the first host, and the destination VTEP identifier is a VTEP identifier of the second layer-3 gateway device.

31. The apparatus according to claim 28, wherein before the generation unit generates the host routing information, the processing unit is further configured to:
obtain the IP address of the first host and the MAC address of the first host based on an ARP entry of the first host; and
determine a VTEP identifier of the second layer-3 gateway device as the VTEP identifier of the next hop, or when a MAC entry of the first host exists, determine a VTEP identifier indicated by the MAC entry as the VTEP identifier of the next hop.

32. The apparatus according to any one of claims 28 to 31, wherein the sending unit is further configured to:
send the host routing information by using a neighbor relationship established between the second layer-3 gateway device and the another layer-3 gateway device; or
send the host routing information to a route reflector by using a neighbor relationship established between the second layer-3 gateway device and the route reflector, so that the route reflector sends the host routing information to the another layer-3 gateway device.

33. The apparatus according to claim 27, wherein the data center further comprises a layer-2 gateway device that is connected between the second layer-3 gateway device and a host managed by the second layer-3 gateway device; and
the VTEP identifier of the next hop is a VTEP identifier of the layer-2 gateway device, the second layer-3 gateway device acts as a route reflector between the first layer-3 gateway device and the layer-2 gateway device, and the second layer-3 gateway device manages the first host; or
the VTEP identifier of the next hop is a VTEP identifier of the second layer-3 gateway device.

34. The apparatus according to claim 27, wherein the second layer-3 gateway device provides a function of a layer-2 gateway device, and the VTEP identifier of the next hop is a VTEP identifier of the second layer-3 gateway device.
